# EUROPEAN PATENT SPECIFICATION

(11) **EP 3 557 395 B1**
(45) Date of publication and mention of the grant of the patent: **05.01.2022**
(21) Application number: 19179556.6
(22) Date of filing: 21.11.2011
(51) Int. Cl.: G06F 3/0482, G06F 3/0488, G06F 21/31, G06F 21/36

(54) **INFORMATION PROCESSING APPARATUS, INFORMATION PROCESSING METHOD, AND COMPUTER PROGRAM**
INFORMATIONSVERARBEITUNGSVORRICHTUNG, INFORMATIONSVERARBEITUNGSVERFAHREN UND COMPUTERPROGRAMM
APPAREIL DE TRAITEMENT D'INFORMATIONS, PROCÉDÉ DE TRAITEMENT D'INFORMATIONS ET PROGRAMME INFORMATIQUE

(30) Priority: 05.01.2011 JP 2011000344
(43) Date of publication of application: 23.10.2019
(62) Divisional of application: 11189897.9
(73) Proprietor: Sony Group Corporation, Tokyo 108-0075 (JP)
(72) Inventor: KOGA, Yasuyuki, Tokyo 108-0075 (JP); YAMAMOTO, Kazuyuki, Tokyo 108-0075 (JP); MIYAZAKI, Reiko, Tokyo 108-0075 (JP); NARITA, Tomoya, Tokyo 108-0075 (JP); YAMANO, Ikuo, Tokyo 108-0075 (JP); OKUMURA, Yasushi, Tokyo 108-0075 (JP)
(74) Representative: MFG Patentanwälte Meyer-Wildhagen Meggle-Freund Gerhard PartG mbB

(56) References cited:
- EP-A1- 1 257 111
- JP-A- 2009 223 426
- US-A1- 2006 197 750
- US-A1- 2009 284 482
- US-A1- 2010 073 303
- US-B1- 6 509 847

## Description

The present disclosure relates to an information processing apparatus, an information processing method, and a computer program, and more particularly, to an information processing apparatus having a sensor for detecting contact of an operating tool at least on the side opposite the display surface, an information processing method thereof, and a computer program thereof.

### BACKGROUND ART

As controllers of GUIs (Graphical User Interface) widely spread as smartphones or the like, there are input devices such as touch panels that use a sensor.

Most input devices of related arts have a configuration according to which a sensor is provided only on the front surface where a display unit is provided. With such input devices, an operation input is performed on the front surface, and therefore there is an issue that information displayed on the display unit is hidden by the finger and the operability is reduced. The operability is expected to be further reduced by the increase in the resolution of the display unit that is taking place in recent times. Further, an input operation from the front surface is easily seen by another person, and when inputting highly confidential information such as a password, for example, it is difficult to hide the information that is being input. Furthermore, with the increase in the touch operation variations in recent times, the movements (gestures) performed at the time of the input operation are more likely to conflict with each other, resulting in more frequent erroneous operations, and thereby reducing the operability.

In recent years, touch panels capable of simultaneously detecting contact of multiple fingers, that is, a so-called multi-touch, are also beginning to be widely used. Also, improvement in the operability is also being realized by providing a plurality of sensors to a device (for example, JP 2010-108061A and JP 2009-157908A). With such a device, an operation input on the back surface is enabled by providing, as a touch panel for detecting contact of a finger, one of the sensors on the opposite side (back surface) of the display unit of the device, and the display screen will not be hidden by the finger even with a small device. Furthermore, by providing a plurality of sensors, intuitive interaction that was not realized with touch panels of related arts, and expansion of the operating system can be realized.

US 2010/073303 A1 discloses a user interface operating method suitable for an electronic device having a touch screen, in which a function is enabled by a second touch on the touch screen when a first touch is detected to be laid on a touch sensitive area. According to an embodiment of the present invention, when the first touch is detected to be laid on the touch sensitive area, a GUI element is displayed on the touch screen, the second touch over the GUI element is detected, and the function of the GUI element is enabled according to the second touch.

US 2006/197750 A1 relates to hand held devices with multiple touch sensing devices, e.g. a portable electronic device including a first touch sensing device in the form of a touch panel such as a touch pad that is situated on the back surface of the housing opposite the display and a second touch sensing device in the form of a touch screen that is positioned over the display.

EP 1 257 111 A1 discloses a mobile terminal having a control panel for command and data entry operations and a display on the side facing the user, whereby the control panel is arranged on the opposite side from the display so that all points on it can be reached with one finger of the hand holding the terminal. The control panel is configured to operate as a fingerprint sensor when the mobile terminal is locked, and as a touch pad when the mobile terminal is unlocked.

US 2009/284482 A1 discloses a method, system, and/or apparatus for a touch-based authentication of a mobile device through user generated pattern creation.

JP 2009 223426 A relates to an information display device having panel-shaped touch input units arranged on front and back surfaces of the device main body. In one embodiment, when a menu item of a menu displayed on the front surface is selected by touching a corresponding position on the back surface, a pop-up window with detailed information for the selected menu item is displayed on the front surface. A user may interact with the pop-up window (e.g. scroll its content) based on a touch input provided to the touch input unit on the front surface.

US 6 509 847 B1 discloses a method for inputting an access code via temporal variations in the amount of pressure applied to a touch interface. The method facilitates the input of the access code, such as a password, in a manner that is indiscernible to third parties, thereby reducing the possibility that the access code may be copied or stolen and used by a third party to gain unauthorised access. In one embodiment, the touch interface used for inputting the access code is mounted to a bottom surface of a laptop or notebook computer, so that it is efficiently shielded from the view of third parties by the computer's housing.

However, if a sensor is placed on the back surface that is not seen by the user at the time of use and therefore the user is not conscious of, there is an issue that an operation based on absolute coordinates, such as an operation of touching a specific button displayed on the display surface or input of a character, becomes difficult.

### SUMMARY

In light of the foregoing, it is desirable to provide an information processing apparatus, an information processing method, and a computer program which are novel and improved, and which are capable of improving input operability of a device by using a detection result of each sensor according to the arranged position of the sensors.

Various respective aspects and features of the invention are defined in the appended claims.

According to an aspect of the present invention, there is provided an information processing apparatus as defined in appended claim 1 .

According to another aspect of the present invention, there is provided an information processing method as defined in appended claim 6.

According to another aspect of the present invention, there is provided a computer program as defined in appended claim 7.

Preferred embodiments of the present invention are defined in the dependent claims.

According to aspects of the present disclosure, an information processing apparatus, an information processing method, and a computer program which are capable of improving input operability of a device by using a detection result of each sensor according to the arranged position of the sensors can be provided.

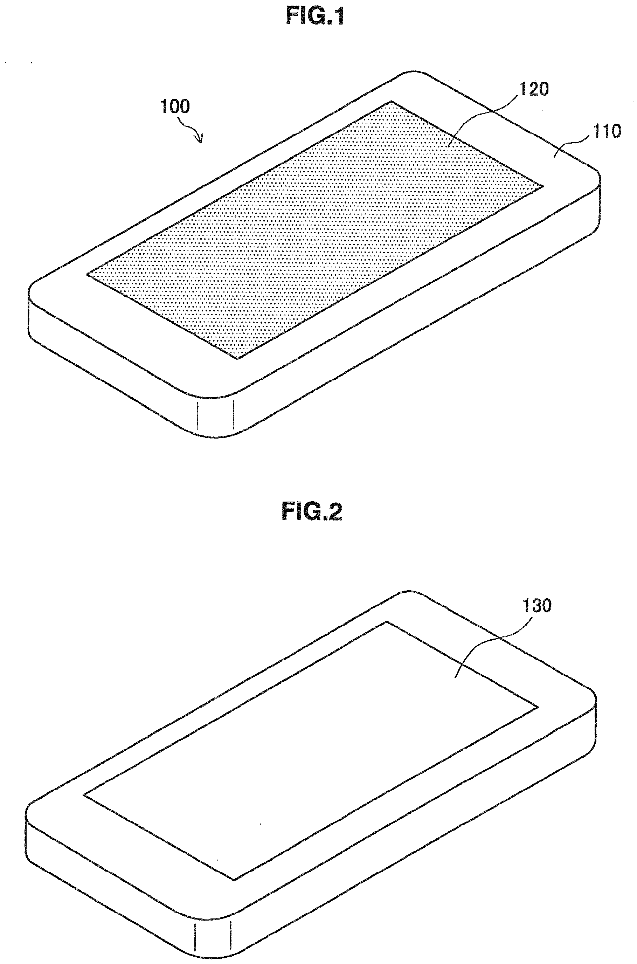

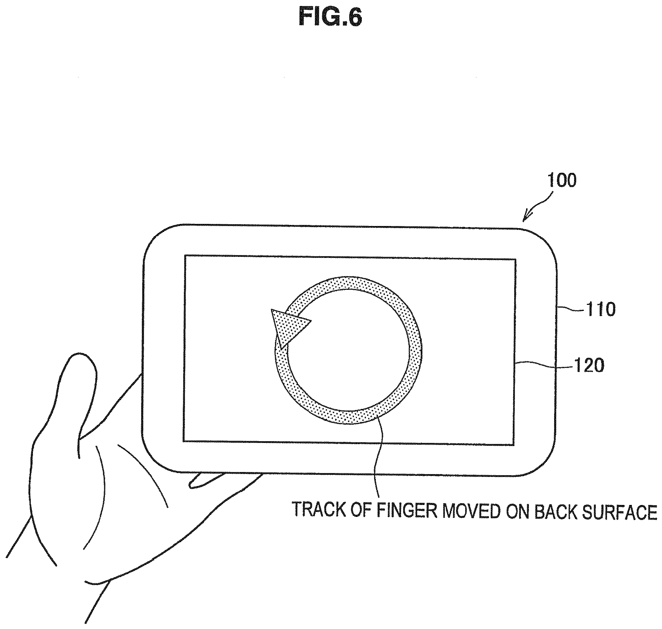

It is noted that the claimed invention relates to the information processing apparatus and information processing method described in relation to FIGS. 6, 7, 13 and 14. Accordingly, any reference in the description to an embodiment, example or aspect in the context of FIGS. 1 to 5, 8 to 12 and 15 to 23 should be understood as a reference to an example that is provided as useful for understanding the claimed invention but without being covered by the scope of the claims.

### BRIEF DESCRIPTION OF THE DRAWINGS

Various respective aspects and features of the invention are defined in the appended claims.
FIG. 1 is a schematic perspective diagram showing a display side of an information processing terminal according to a first embodiment of the present disclosure;
FIG. 2 is a schematic perspective diagram showing a back surface side of the information processing terminal according to the embodiment;
FIG. 3 is a functional block diagram showing a functional configuration of the information processing terminal according to the embodiment;
FIG. 4 is an explanatory diagram showing a state where a tap or a long press input is performed on the back surface;
FIG. 5 is a flow chart showing an authentication process based on a detection result of a tap or a long press at a back-surface detection unit;
FIG. 6 is an explanatory diagram in accordance with the present invention, showing a state where a graphic input is performed on the back surface;
FIG. 7 is a flow chart in accordance with the present invention, showing an authentication process based on a detection result of a graphic input at the back-surface detection unit;
FIG. 8 is a flow chart showing an application execution process based on a detection result of a graphic input at the back-surface detection unit;
FIG. 9 is an explanatory diagram showing a state where a displayed object is fixed from the back surface side, and an operation input for operating the object is performed on the front surface side;
FIG. 10 is a flow chart showing the process of the operation input of FIG. 9;
FIG. 11 is an explanatory diagram showing a state where display content regarding an object is switched from the back surface side, and an operation input for operating the object is performed on the front surface side;
FIG. 12 is a flow chart showing the process of the operation input of FIG. 11;
FIG. 13 is an explanatory diagram in accordance with the present invention, showing a state where an object is displayed by an operation input on the back surface side, and an operation input for operating the object is performed on the front surface side;
FIG. 14 is a flow chart showing the process of the operation input of FIG. 13;
FIG. 15 is an explanatory diagram showing a state where a plurality of objects are arranged on a display unit of an information processing terminal according to a second embodiment of the present disclosure;
FIG. 16 is an explanatory diagram describing an operation input for moving an object displayed on the display unit;
FIG. 17 is an explanatory diagram describing an example of touch operations on the same object;
FIG. 18 is an explanatory diagram describing an example of determination of touch operations on the same object;
FIG. 19 is a flow chart showing an example of the operation input process for an object based on FIGS. 15 to 18;
FIG. 20 is an explanatory diagram describing an operation input for moving the fingers operating an object in an opposite direction;
FIG. 21 is an explanatory diagram describing an operation input process of decreasing or increasing, relative to the amount of movement of a target of operation, the amount of movement of an object that is to be moved according to the operation on the target of operation;
FIG. 22 is an explanatory diagram for describing a zoom-in/zoom-out function based on an operation input on displayed content from the front surface and the back surface; and
FIG. 23 is a hardware configuration diagram showing an example hardware configuration of the information processing terminal.

### DETAILED DESCRIPTION

Hereinafter, preferred embodiments of the present disclosure will be described in detail with reference to the appended drawings. Note that, in this specification and the appended drawings, structural elements that have substantially the same function and configuration are denoted with the same reference numerals, and repeated explanation of these structural elements is omitted.

Additionally, an explanation will be given in the following order.
<1. First Embodiment
   [1-1. Example of Appearance of Information Processing Terminal]
   [1-2. Functional Configuration]
   [1-3. Utilization of Back-Surface Detection Unit]
      (1-3-1. Use at the Time of Password Input)
      (1) In the Case of Using Tap or Long Press as Authentication Information
      (2) In the Case of Using Graphic Input as Authentication Information
      (1-3-2. Expansion of Operating System by Combination with Front-Surface Detection Unit)
      (1) Operation Input for Fixing Displayed Object from Back Surface Side and Operating the Object from Front Surface Side
      (2) Operation Input for Switching Display Content regarding Object from Back Surface Side and Operating the Object from Front Surface Side
      (3) Operation Input for Causing Object to be Displayed by Operation Input on Back Surface Side and Operating the Object from Front Surface Side
<2. Second Embodiment>
   [2-1. Functional Overview of Information Processing Terminal]
   [2-2. Operation Input Process by Combination of Detection Results from Front-Surface Detection Unit and Back-Surface Detection Unit]
      (2-2-1. Function Execution by Simultaneous Detection)
      (1) Explanation of Process for Executing Predetermined Function at the Time of Simultaneous Detection
      (2) Process Flow
      (3) Modified Example
      (2-2-2. Zoom-In/Zoom-Out Function Based on Operation Input for Displayed Content from Front Surface and Back Surface)
<3. Example Hardware Configuration>

### <1. First Embodiment>

### [1-1. Example of Appearance of Information Processing Terminal]

First, a schematic configuration of an information processing terminal 100 according to a first embodiment of the present disclosure will be described with reference to FIGS. 1 and 2. Additionally, FIG. 1 is a schematic perspective diagram showing a display side of the information processing terminal 100 according to the present embodiment. FIG. 2 is a schematic perspective diagram showing a back surface side of the information processing terminal 100 according to the present embodiment.

The information processing terminal 100 according to the present embodiment is provided, as shown in FIG. 1, with a display unit 120 on one surface (display surface) of a casing 110, and is provided, as shown in FIG. 2, with a touch sensor 130 that is capable of detecting contact of an operating tool such as a finger or the like on the surface (back surface) opposite the display surface. As the display unit 120, a liquid crystal display, an organic EL display, or the like may be used, for example. Also, as the touch sensor 130, a capacitive touch sensor may be used. It is sufficient that the information processing terminal 100 according to the present embodiment includes, at least on the back surface side, the touch sensor 130 for detecting an operation input, but it may also include a touch sensor on the display side. In the following, an explanation will be given assuming that the information processing terminal 100 according to the present embodiment includes a touch sensor on the front surface and the back surface.

### [1-2. Functional Configuration]

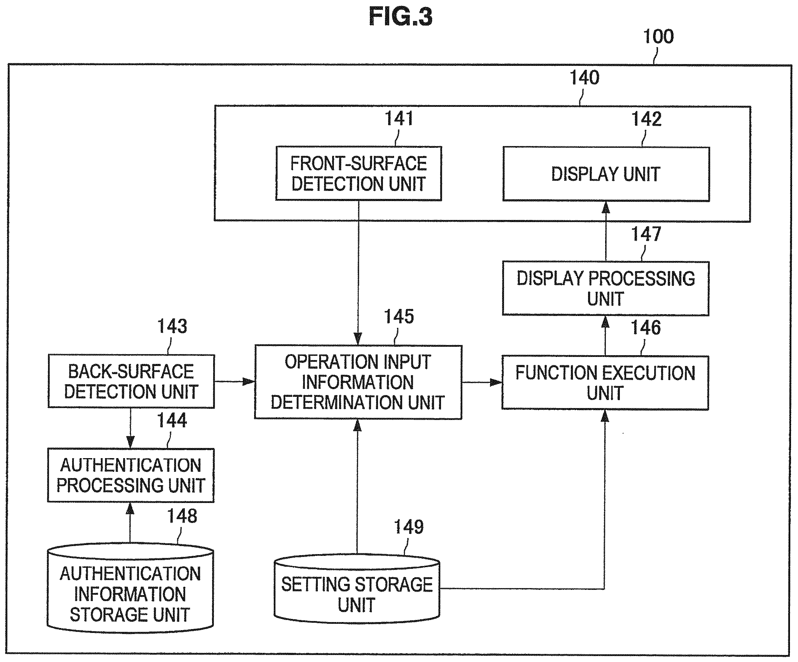

Next, a functional configuration of the information processing terminal 100 according to the present embodiment will be described based on FIG. 3. FIG. 3 is a functional block diagram showing a functional configuration of the information processing terminal 100 according to the present embodiment. As shown in FIG. 3, the information processing terminal 100 according to the present embodiment includes a detection display unit 140, a back-surface detection unit 143, an authentication processing unit 144, an operation input information determination unit 145, a function execution unit 146, a display processing unit 147, an authentication information storage unit 148, and a setting storage unit 149.

The detection display unit 140 is provided on one surface of the information processing terminal 100, and is, as shown in FIG. 3, formed from a front-surface detection unit 141 and a display unit 142. The surface of the information processing terminal 100 on which the detection display unit 140 is provided is the front surface. The front-surface detection unit 141 is a sensor for detecting contact of an operating tool on the front surface of the information processing terminal 100. The detection result of the front-surface detection unit 141 is output to the operation input information determination unit 145 which will be described later. The display unit 142 is an output device for displaying information, and corresponds to the display unit 120 shown in FIG. 1. The display unit 142 displays information based on display information input by the display processing unit 147.

The front-surface detection unit 141 may be provided being stacked with the display unit 142, for example. Thereby, when an operating tool is made to contact and move on the display surface of the display unit 142, the operation content may be presented to a user in an easy-to-grasp manner by, for example, moving an object or the like displayed on the display unit 142 in accordance with the movement of the operating tool. Also, the user is allowed to intuitively operate an object displayed on the display unit 142, and the operability may be improved.

The back-surface detection unit 143 is provided on the back surface of the information processing terminal 100, and is a sensor for detecting contact of the operating tool on the back surface. The detection result of the back-surface detection unit 143 is output to the authentication processing unit 144 and the operation input information determination unit 145 which will be described later.

The authentication processing unit 144 performs an authentication process of the information processing terminal 100 based on the detection result of the back-surface detection unit 143. The authentication processing unit 144 compares input information identified based on the detection result of the back-surface detection unit 143 and authentication information stored in the authentication information storage unit 148 described later, and determines whether these match each other or not. In the case it is determined that the input information and the authentication information match, the authentication processing unit 144 sets the information processing terminal 100 to an enabled state. On the other hand, in the case it is determined that the input information and the authentication information do not match, the authentication processing unit 144 sets the information processing terminal 100 to a disabled state.

The operation input information determination unit 145 determines the content of the operation input which has been input to the information processing terminal 100, based on each detection result of the front-surface detection unit 141 and the back-surface detection unit 143. The operation input information determination unit 145 determines what kind of operation input has been input, based on the present/absence of contact of the operating tool or the movement of the operating tool detected by each detection unit. Then, the operation input information determination unit 145 refers to the setting storage unit 149 which will be described later, identifies the function associated with the operation input information which has been determined, and outputs an instruction for execution of the identified function to the function execution unit 146.

The function execution unit 146 executes the function identified by the operation input information determination unit 145. For example, the function execution unit 146 causes an application associated with a predetermined operation input to be executed. At this time, the function execution unit 146 may also acquire information necessary for the execution of the function from the setting storage unit 149. Also, in the case of changing the display mode of an object or the like displayed on the display unit 142 or of changing the display content, for example, the function execution unit 146 instructs the display processing unit 147 to change the display information.

The display processing unit 147 performs the process of generating the display information to be displayed on the display unit 142. The display processing unit 147 generates the display information in which the display content is changed to a format for display on the display unit 412, based on the instruction from the function execution unit 146 or an instruction from another function unit (not shown). The display information generated by the display processing unit 147 is output to the display unit 142, and display content based on the display information is displayed on the display unit 142.

The authentication information storage unit 148 stores authentication information that is used for the authentication process by the authentication processing unit 144. In the present embodiment, a gesture is used as the authentication information. The authentication information is set as information unique to each user or each terminal, for example, and is stored in the authentication information storage unit 148 in association with the target of authentication (user, terminal, or the like). With respect to setting of the authentication information, the user may input a gesture that is the authentication information and associate the same with the target of authentication, or the user may associate information indicating the content of a gesture that is set in advance with the target of authentication. The gesture stored in the authentication information storage unit 148 as the authentication information is matched with the content of an operation input that is input by the user by moving the operating tool.

The setting storage unit 149 stores information necessary for determination of operation input information, execution of a function associated with the operation input information, execution of the function, and the like. These pieces of information may be set in advance or may be set by the user as necessary. Furthermore, a memory (not shown) for temporarily storing necessary information at the time of performing each process may also be provided in the information processing terminal 100.

In the foregoing, the functional configuration of the information processing terminal 100 according to the present embodiment has been described.

### [1-3. Utilization of Back-Surface Detection Unit]

The information processing terminal 100 according to the present embodiment includes the back-surface detection unit 143 for detecting contact of the operating tool on the back surface. As described above, an operation on the back surface has a feature that, unlike a normal operation on the front surface, the operation is difficult for the people nearby to see. Thus, the information processing terminal 100 according to the present embodiment takes advantage of such feature of the back-surface detection unit 143 and uses the back-surface detection unit 143 for input of highly confidential information, such as password input.

Also, the operation on the back surface may be input independently of the normal operation on the front surface. Accordingly, a shortcut function registered in advance may be executed in the application, for example, in the case a certain operation is detected on the back surface. The operation can be thereby simplified without conflicting with the normal operation on the front surface. At this time, the operation input on the back surface is not visible to the user performing the operation input, but with the information processing terminal 100 according to the present embodiment, the operation input on the back surface is itself made simple, and thus the operability is prevented from being reduced even if the operation input is not visible. Also, information input from the back surface is not displayed on the display unit 142, and the confidentiality of the information is maintained.

In the following, an example of the operation input for the information processing terminal 100 according to the present embodiment that uses the back-surface detection unit 143 will be described.

### (1-3-1. Use at the Time of Password Input)

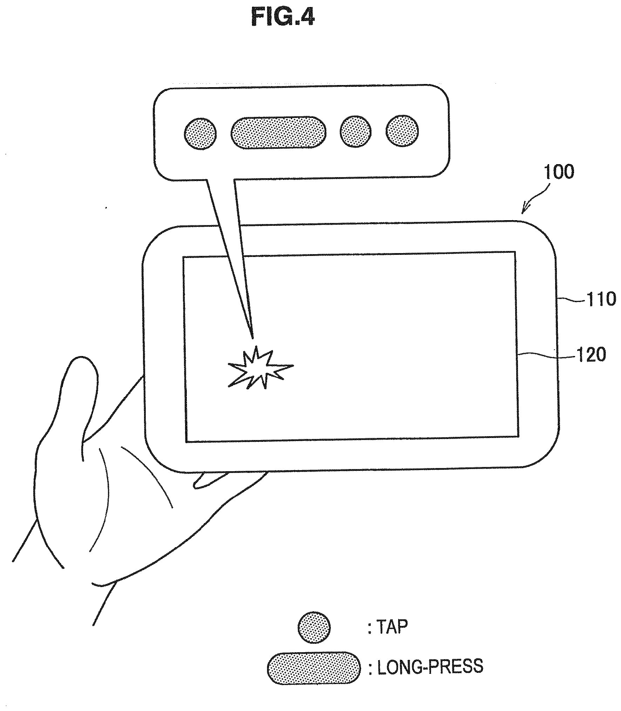

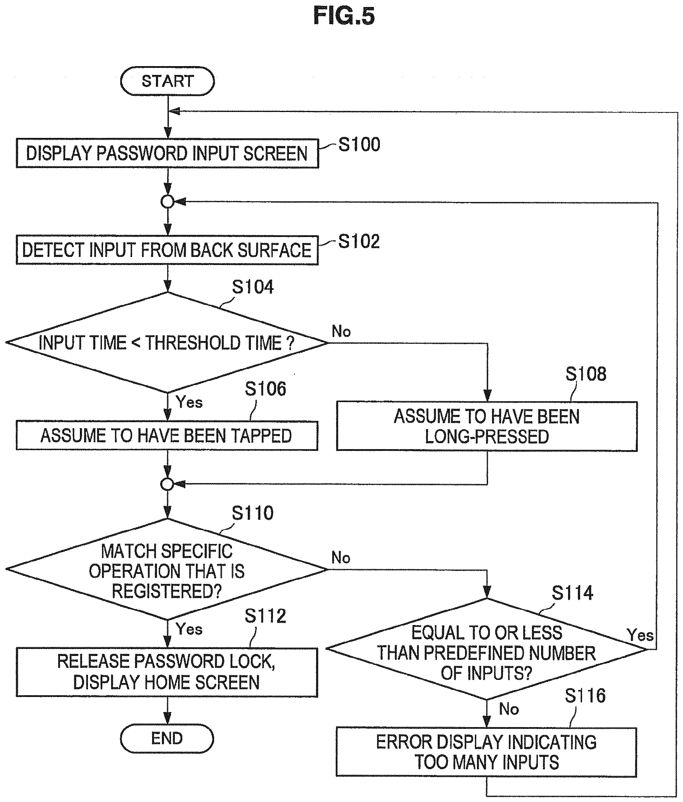

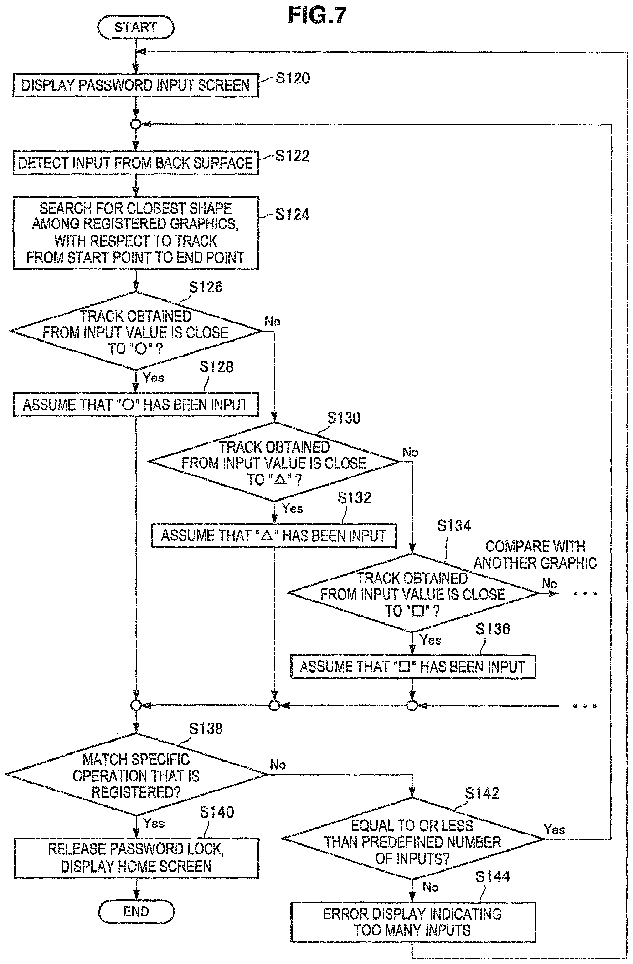

First, an authentication process based on an operation input to the back-surface detection unit 143 of the information processing terminal 100 according to the present embodiment will be described based on FIGS. 4 to 7. Additionally, FIG. 4 is an explanatory diagram showing a state where a tap or a long press input is performed on the back surface. FIG. 5 is a flow chart showing an authentication process based on a detection result of a tap or a long press at the back-surface detection unit 143. FIG. 6 is an explanatory diagram showing a state where a graphic input is performed on the back surface. FIG. 7 is a flow chart showing an authentication process based on a detection result of a graphic input at the back-surface detection unit 143.

A password used for user authentication or the like is highly confidential information, and is information with respect to which the movement of the hand performing the password input operation or the input content should not be seen by the people nearby. In the present embodiment, the password input is performed on the back surface side where the operation input is difficult for the people nearby to see, and the operation input performed on the back surface side is detected by the back-surface detection unit 143. At this time, since the user is also not allowed to see the operation input on the back surface, information that is easy to input is used as the password.

### (1) In the Case of Using Tap or Long Press as Authentication Information

Information that is easy to input in spite of the operation input not being able to be seen may be operation input information of varying input times on the back surface, such as taps, long presses, or the like, for example. For example, as shown in FIG. 4, an operation of one tap, one long press, and two taps that the user has performed by changing the time of contact of the finger on the back surface can be taken as the operation input information. Changing of the time of contact of the finger on the back surface can be easily performed even if the user is not looking at the input operation.

The authentication process for a case of password input by a tap or long press input is as shown in FIG. 5. That is, first, the display unit 142 is made to display a password input screen (S100). The password input screen may be displayed by performing a predetermined operation input, for example, by pressing a predetermined button (not shown) provided on the information processing terminal 100 or performing from the front surface an operation input for displaying the password input screen.

When the password input screen is displayed, an operation input on the back surface is detected by the back-surface detection unit 143 (S102). That is, the user checks that the password input screen is displayed and inputs the password from the back surface, and the input password is detected by the back-surface detection unit 143. The detection result of the back-surface detection unit 143 is output to the authentication processing unit 144.

Then, the authentication processing unit 144 compares the input time which is the time the finger was in contact with the back surface and a predetermined time (a threshold time) based on the detection result of the back-surface detection unit 143 (S104). The maximum time which can be considered as a tap input may be set as the threshold time, for example. In the case the input time is determined in step S104 to be shorter than the threshold time, the authentication processing unit 144 assumes that a tap input has been performed (S106). On the other hand, in the case the input time is determined in step S104 to be the threshold time or longer, the authentication processing unit 144 assumes that a long press input has been performed (S108).

Then, the authentication processing unit 144 compares the authentication information stored in the authentication information storage unit 148 and the operation input information that is based on the detection result of the back-surface detection unit 143, and determines whether these match each other or not (S110). The operation input information is formed from input(s) detected by the back-surface detection unit 143 after the display of the password input screen, and a series of operation inputs input until the password input is determined to be complete is taken as a piece of operation input information. Additionally, each operation forming the operation input information, such as a tap input or a long press input, is referred to as input information. That is, the operation input information is formed from one or more pieces of input information.

In the case it is determined that the operation input information and the authentication information match each other, the authentication processing unit 144 releases the password lock, and causes the display unit 142 to display a home screen which is to be displayed first after the information processing terminal 100 is enabled (S112).

On the other hand, in the case it is determined that the operation input information and the authentication information do not match each other, the authentication processing unit 144 determines whether the number of pieces of input information forming the operation input information exceeds a predefined number of inputs (S114). In the case the number of pieces of input information exceeds the predefined number of inputs in step S114, the number of inputs is too many, and that an authentication error has occurred is displayed on the display unit 142, and the user is notified to the effect (S116). Then, the authentication processing unit 144 resets the operation input information formed from the pieces of input information which have been input, and performs again the process from step S100. On the other hand, in the case the number of pieces of input information does not exceed the predefined number of inputs in step S114, it is decided that the password is still being input, and the process is repeated from step S102.

In the foregoing, the authentication process for a case where password input is performed by a tap or a long press input has been described. By varying the time of contact, such as a tap or long press, of the finger on the back surface and inputting the operation input information, the password input operation of the user will be less likely to be seen by the people nearby, and the confidentiality of the password may be maintained. Also, the input operation of the user is simple, and thus the operability is not reduced due to not being able to see the input operation.

### (2) In the Case of Using Graphic Input as Authentication Information

According to the present invention, a graphic drawn by the finger on the back surface is taken as the authentication information. For example, as shown in FIG. 6, it is assumed that the user moves the finger that is in contact with the back surface of the information processing terminal 100 and draws a circle. The track of the finger recognized by the detection result of the back-surface detection unit 143 is made the operation input information. Drawing of a graphic can be easily performed without looking at the input operation, as with the tap and the long press input described above.

The authentication process in the case of password input by a graphic input is as shown in FIG. 7. Additionally, detailed explanation on a process which is the same as the process shown in FIG. 5 is omitted. First, the information processing terminal 100 is made to display a password input screen on the display unit 142 (S120). When the password input screen is displayed, an operation input on the back surface is detected by the back-surface detection unit 143 (S122). The detection result of the back-surface detection unit 143 is output to the authentication processing unit 144. The processes of S120 and S122 may be performed in the same manner as steps S100 and S102 in FIG. 5.

Then, the authentication processing unit 144 compares, based on the detection result of the back-surface detection unit 143, the track of the movement of the finger on the back surface and graphics stored in the authentication information storage unit 148, and searches for the closest graphic (S124). The authentication processing unit 144 sequentially compares the graphics stored in the authentication information storage unit 148 and the operation input information which is the track of the finger identified based on the detection result of the back-surface detection unit 143.

For example, the authentication processing unit 144 determines whether the operation input information is close to a circle (S126), and when the operation input information is determined to be close to a circle, it is assumed that a graphic "o" is input (S128). Also, the authentication processing unit 144 determines whether the operation input information is close to a triangle (S130), and when the operation input information is determined to be close to a triangle, it is assumed that a graphic "Δ" is input (S132). Furthermore, the authentication processing unit 144 determines whether the operation input information is close to a square (S134), and when the operation input information is determined to be close to a square, it is assumed that a graphic "□" is input (S136). In this manner, the authentication processing unit 144 sequentially compares the operation input information and the graphics which are the pieces of authentication information stored in the authentication information storage unit 148, and identifies a matching graphic.

Then, the authentication processing unit 144 determines whether or not there is authentication information (graphic) that the operation input information matches (S138). In the case it is determined in step S138 that there is authentication information (graphic) that the operation input information matches, the authentication processing unit 144 releases the password lock, and causes the display unit 142 to display a home screen which is to be displayed first after the information processing terminal 100 is enabled (S140).

On the other hand, in the case it is determined that there is no authentication information (graphic) that the operation input information matches, the authentication processing unit 144 determines whether the number of pieces of input information forming the operation input information exceeds the predefined number of inputs (S142). The input information of the present example refers to the track from the start point where the finger contacted the back surface and the end point where the finger is removed from the back surface, and the operation input information is such input information or a combination thereof. In the case the number of pieces of input information exceeds the predefined number of inputs in step S142, the number of inputs is too many, and that an authentication error has occurred is displayed on the display unit 142, and the user is notified to the effect (S144). Then, the authentication processing unit 144 resets the operation input information formed from the pieces of input information which have been input, and performs again the process from step S120. On the other hand, in the case the number of pieces of input information does not exceed the predefined number of inputs in step S142, it is decided that the password is still being input, and the process is repeated from step S122.

In the foregoing, the authentication process for a case where password input is performed by a graphic input has been described. By inputting the operation input information from the back surface, the password input operation of the user will be less likely to be seen by the people nearby, and the confidentiality of the password may be maintained. Also, since the input operation of the user is made simple by using a simple graphic such as a circle, a triangle, a square, and the like as the password, the operability is not reduced due to not being able to see the input operation.

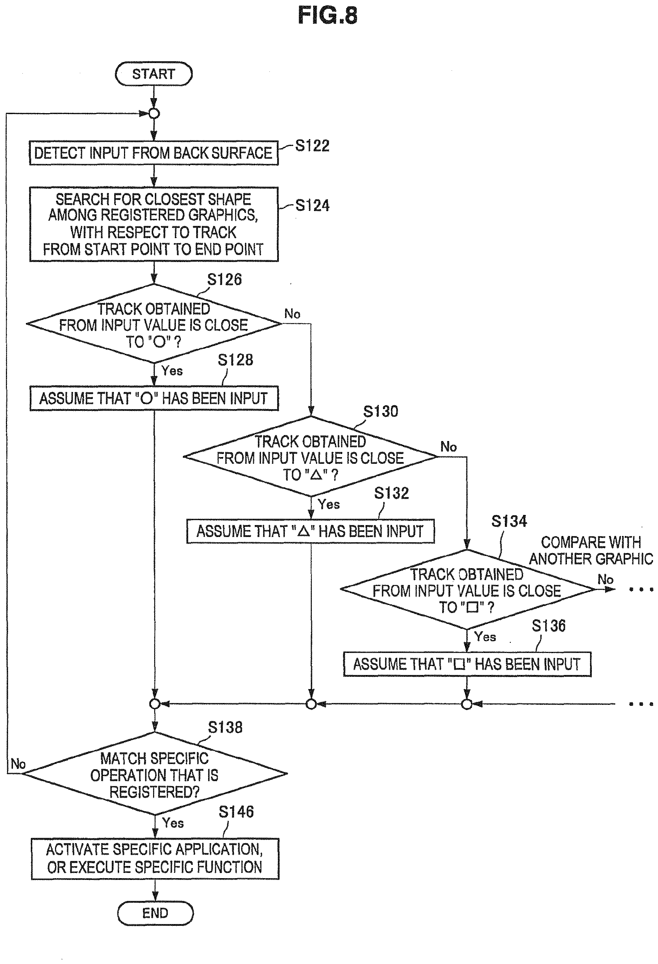

Additionally, the process performed using the detection result of the back-surface detection unit 143 may be used not only for the password input described above, but also for command input for execution of a predetermined application, for example. A flow chart for a case where the authentication process of (2) described above based on the detection result for the graphic input at the back-surface detection unit is applied to an application execution process is shown in FIG. 8. In FIG. 8, sections where the same processes as FIG. 7 are performed are denoted with the same reference numerals as FIG. 7.

As shown in FIG. 8, with respect to the process for the case of performing command input by a graphic input to execute an application, first, an operation input to the back surface is detected by the back-surface detection unit 143 (S122). The detection result of the back-surface detection unit 143 is output to the operation input information determination unit 145. The operation input information determination unit 145 compares, based on the detection result of the back-surface detection unit 143, the track of the movement of the finger on the back surface and graphics stored in the setting storage unit 149, and searches for the closest graphic (S124).

That is, the operation input information determination unit 145 sequentially compares the graphics stored in the setting storage unit 149 and the operation input information which is the track of the finger identified based on the detection result of the back-surface detection unit 143. For example, as shown in steps S126 to S136, the operation input information determination unit 145 compares the operation input information and the graphics stored in the setting storage unit 149, such as graphics "o," "Δ," and "□," and identifies a matching graphic.

Then, the operation input information determination unit 145 determines whether or not there is registered information (graphic) stored in the setting storage unit 149 that the operation input information matches (S138). In the case it is determined in step S138 that there is registered information (graphic) that the operation input information matches, the operation input information determination unit 145 instructs the function execution unit 146 to activate a predetermined application that is associated with the registered information (S146). Besides application, the registered information may also be associated with a predetermined function, and the predetermined function that is associated with the registered information may be executed by the operation input information determination unit 145.

On the other hand, in the case it is determined that there is no registered information (graphic) that the operation input information matches, the operation input information determination unit 145 resets the operation input information formed from the pieces of input information which have been input, and performs again the process from step S122.

In this manner, a command input for execution of an application may also be performed by a graphic input. The user is thereby enabled to execute an application with a simple input operation, and the operability of the terminal can be improved.

### (1-3-2. Expansion of Operating System by Combination with Front-Surface Detection Unit)

Next, in the case the front-surface detection unit 141 is provided on the front surface of the information processing terminal 100, as in the present embodiment, combination with the detection result of the back-surface detection unit 143 allows reduction in the number of operation steps on the front surface, compared to related arts according to which only operation on the front surface is possible. Also, even if the front-surface detection unit 141 is not compatible with multi-touch capable of detecting contact of a plurality of operating tools, combining the detection results of the front-surface detection unit 141 and the back-surface detection unit 143 enables various operation inputs.

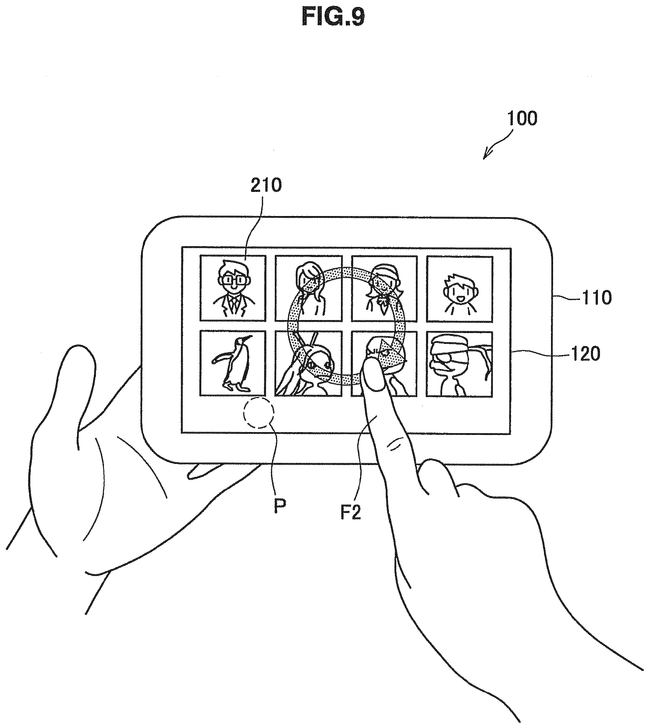

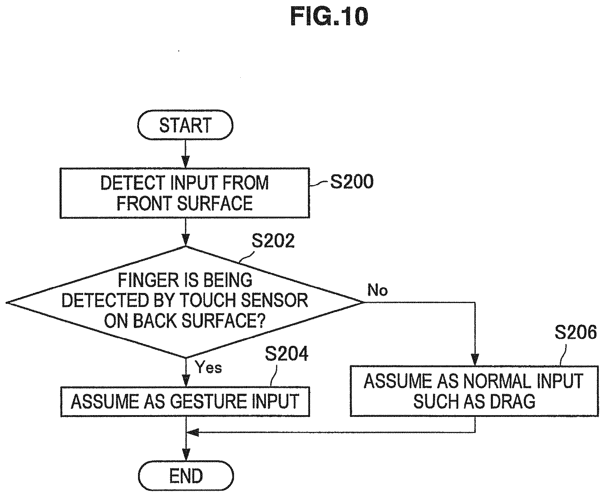

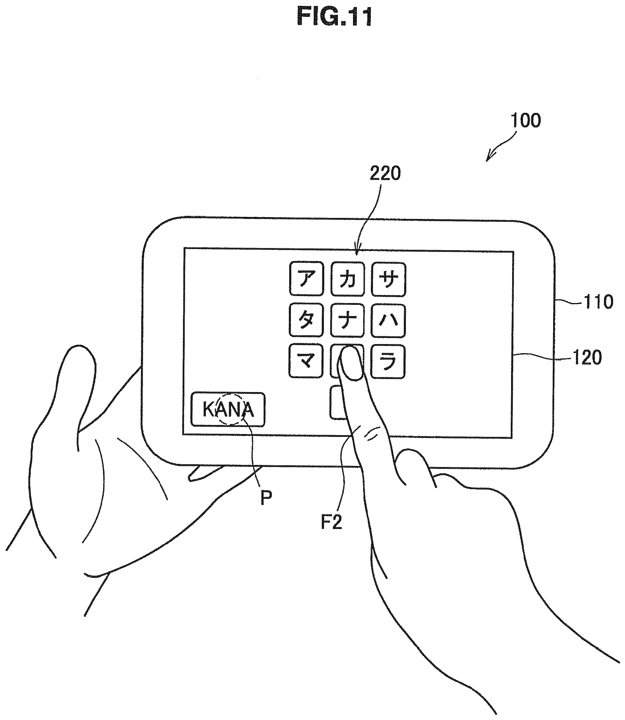

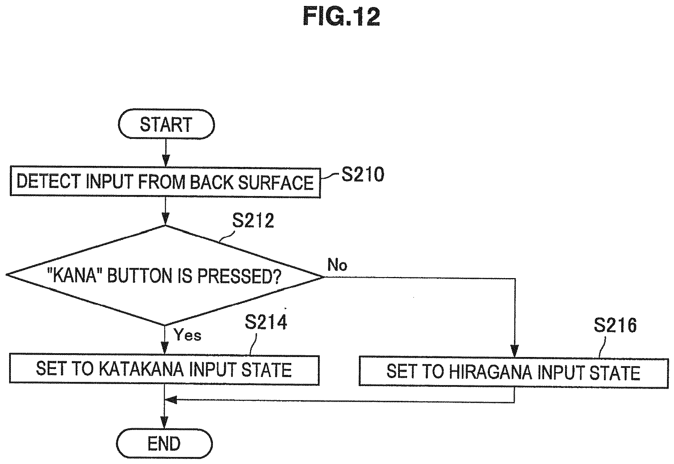

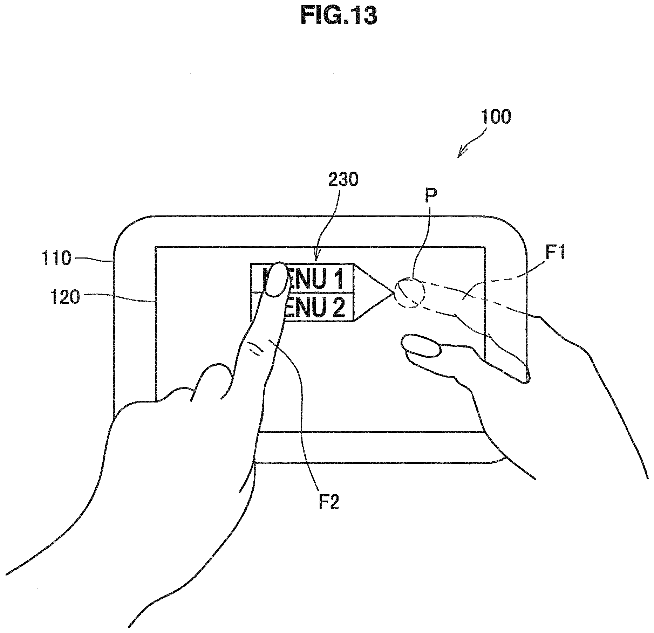

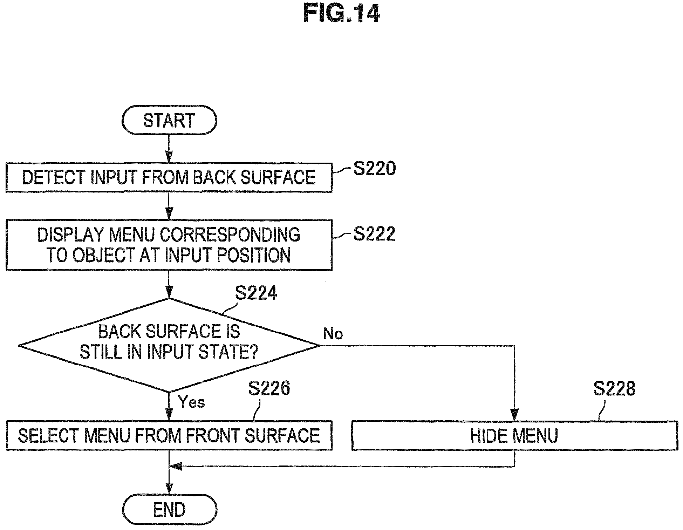

In the following, an operation input method of the information processing terminal 100 according to the present embodiment based on the combination of the detection results of the front-surface detection unit 141 and the back-surface detection unit 143 will be described based on FIGS. 9 to 14. FIG. 9 is an explanatory diagram showing a state where a displayed object is fixed from the back surface side, and an operation input for operating the object is performed on the front surface side. FIG. 10 is a flow chart showing the process of the operation input of FIG. 9. FIG. 11 is an explanatory diagram showing a state where display content regarding an object is switched from the back surface side, and an operation input for operating the object is performed on the front surface side. FIG. 12 is a flow chart showing the process of the operation input of FIG. 11. FIG. 13 is an explanatory diagram showing a state where an object is displayed by an operation input on the back surface side, and an operation input for operating the object is performed on the front surface side. FIG. 14 is a flow chart showing the process of the operation input of FIG. 13.

### (1) Operation Input for Fixing Displayed Object from Back Surface Side and Operating the Object from Front Surface Side

First, an operation input for fixing a displayed object from the back surface side and operating the object from the front surface side will be described based on FIGS. 9 and 10. This operation input is effective when performing an operation of scrolling, when a list of contents or photographs, a map or the like is displayed on the display unit 142 as the object, the object displayed on the display unit 142, and when performing an operation on the object. Particularly, when a drag operation of moving the finger in a certain direction on the front surface is performed, a function to be executed in relation to the operation on the front surface can be switched by a simple operation input, by switching the function to be executed depending on whether an operation input on the back surface is detected by the back-surface detection unit 143 or not.

An object list including a plurality of objects 210 each associated with content is shown in FIG. 9. In the case the number of objects 210 forming the object list is too large and not all of them are displayed within the display screen, a drag operation may be performed on the front surface, and the object list may be scrolled according to the direction of the drag operation. Also, when selecting desired objects 210 at once from the object list, the objects 210 may be selected by an operation of surrounding the objects 210 by the finger. These operations are performed from the front surface because it is easier for the user to perform the operation while checking the input operation, but with a related art according to which only inputs from the front surface are allowed because of the conflict between the operation inputs, it was possible to realize only one of these operations.

Thus, according to the present embodiment, using the fact that an operation input from the back surface can be detected, these functions are switched depending on whether the finger is in contact with the back surface at an arbitrary position. That is, as shown in FIG. 10, first, when an input from the front-surface detection unit 141 is detected (S200), the operation input information determination unit 145 determines whether or not contact of the finger on the back surface is detected by the back-surface detection unit 143 which is a touch sensor provided on the back surface (S202).

In the case contact of the finger on the back surface is detected in step S202, the operation input information determination unit 145 identifies the movement (gesture) of a finger F2 on the display screen based on the detection result of the front-surface detection unit 141, and causes the function execution unit 146 to execute a function corresponding to the gesture (S204). In the example of FIG. 9, a function of selecting a desired object 210 from the object list is executed. On the other hand, in the case it is determined in step S202 that contact of the finger on the back surface is not detected, the operation input information determination unit 145 causes the function execution unit 146 to execute a normal function based on the detection result of the front-surface detection unit 141 (S206). In the example of FIG. 9, scroll of the object list will be performed.

In this manner, a function to be executed based on the detection result of the front-surface detection unit 141 may be switched according to the detection result of the back-surface detection unit 143. This operation is an intuitive operation of fixing, by making a finger contact the back surface, the objects 210 displayed on the display unit 142 so that they do not move, and is an operation that is easy for the user to perform.

When applying such an operation to the operation of a map displayed on the display screen, the map may be scrolled by a drag operation of the finger F2 on the front surface in the case no contact of a finger on the back surface is detected by the back-surface detection unit 143, for example. On the other hand, in the case contact of a finger on the back surface is detected by the back-surface detection unit 143, another function, such as partial selection, enlargement/reduction, or the like, may be performed by the drag operation of the finger F2 on the front surface.

Furthermore, the objects 210 displayed on the display unit 142 can be fixed by contact of a finger on the back surface, and thus, with respect to an UI according to which the display position of the object 210 can be moved by tilting of the casing 110, for example, the object 210 can be prevented from moving during operation even if the casing 110 tilted, by performing an operation of making a finger contact the back surface at the time of operating the object 210.

### (2) Operation Input for Switching Display Content regarding Object from Back Surface Side and Operating the Object from Front Surface Side

Next, an operation input for switching display content regarding object from the back surface side and operating the object from the front surface side will be described based on FIGS. 11 and 12. This input is effective, in relation to an application allowing input of different operations depending on the modes, for an operation of temporarily switching the mode only when there is input detection from the back surface, for example. Specifically, the detection result of the back-surface detection unit 143 is used as an alternative for the shift key of a keyboard or a key for switching an input character.

An example is shown in FIG. 12 where a software keyboard 220 including character input keys and an input character switching key is displayed on the display unit 142. Every time the input character switching key is pressed, a hiragana input mode by which a hiragana is input and a katakana input mode by which a katakana is input is switched. In related arts where operation input is performed only from the front surface, the character input key and the input character switching key have to be operated by the finger F2 for performing an operation input on the front surface, and the number of front-surface operation steps is large. In contrast, according to the present embodiment, the function of the input character switching key is realized by having the input character remain switched while the finger is in contact with an arbitrary position on the back surface. This allows the number of front-surface operation steps to be reduced.

That is, as shown in FIG. 12, first, when an input from the back-surface detection unit 143 is detected (S210), the operation input information determination unit 145 determines whether a finger is in contact with the input character switching key ("kana" button in FIG. 11) from the back surface, based on the detection result of the back-surface detection unit 143, which is the touch sensor provided on the back surface (S212).

In the case contact of a finger on the back surface is detected in step S212, the operation input information determination unit 145 sets the katakana input mode, which allows input of a katakana by the character input key (S214). When a finger is in contact with the "kana" button from the back surface as shown in FIG. 11 (that is, when a contact point P is in an area corresponding to the "kana" button), a katakana may be input by the character input key. On the other hand, in the case it is determined in step S212 that contact of a finger on the back surface is not detected, the operation input information determination unit 145 sets the hiragana input mode, which allows input of a hiragana by the character key (S216). In the example of FIG. 11, when the finger is removed from the area, on the back surface, corresponding to the "kana" button, the character to be input by the character input key can be made a hiragana.

As described, the function to be executed based on the detection result of the front-surface detection unit 141 may be switched according to the detection result of the back-surface detection unit 143. Furthermore, with such an operation, the number of front-surface operation steps may be reduced, and the operational burden on the user may be reduced.

### (3) Operation Input for Causing Object to be Displayed by Operation Input on Back Surface Side and Operating the Object from Front Surface Side

Next, an operation input for causing an object to be displayed by an operation input on the back surface side and operating the object from the front surface side will be described based on FIGS. 13 and 14. According to the present invention, this input is applied to an operation of causing a menu that is not normally displayed on the display unit 142 to be displayed on the display unit 142 only when a finger is in contact with a specific area on the back surface. The menu that is displayed when a finger is in contact with the specific area on the back surface may be operated from the front surface.

As one example, an example in which a menu 230 is displayed on the display unit 142 when a finger is in contact with the specific area on the back surface is shown in FIG. 13. The menu 230 is displayed only when a contact point P of a finger F1 that is at the back surface side is in the specific area on the back surface, and when the finger F1 is removed from the back surface, the menu 230 will be hidden. As shown in FIG. 14, according to such an operation input process, first, when an input from the back-surface detection unit 143 is detected (S220), the operation input information determination unit 145 specifies in which area on the back surface the contact point P of the finger F1 exists, based on the detection result of the back-surface detection unit 143, which is the touch sensor provided on the back surface. Then, the operation input information determination unit 145 instructs the function execution unit 146 to cause the display unit 142 to display the menu 230 corresponding to the area where the contact point P exists (S222).

When the function execution unit 146 is instructed in step S222 to display the menu 230, the display processing unit 147 causes the display unit 142 to display the menu 230. The menu 230 displayed on the display unit 142 may be operated from the front surface by the finger F2, for example. When the menu 230 is displayed, the operation input information determination unit 145 determines whether or not contact of the finger F1 is being detected by the back-surface detection unit 143 (S224). In the case there is contact detection of the finger F1 by the back-surface detection unit 143, the menu 230 continues to be displayed, and the user is allowed to operate the menu 230 from the front surface (S226). On the other hand, in the case contact of the finger F1 is no longer detected by the back-surface detection unit 143, the operation input information determination unit 145 instructs the function execution unit 146 to hide the menu 230 (S228).

As described, information to be displayed on the display unit 142 may be displayed or hidden depending on the detection result of the back-surface detection unit 143. Furthermore, by having the display unit 142 display a predetermined object 210 only when a finger is in contact with the specific area on the back surface, the number of front-surface operation steps may be reduced.

In the foregoing, the configuration of the information processing terminal 100 according to the present embodiment and its function have been described. According to the present embodiment, confidentiality of highly confidential information may be maintained by utilizing the property of the back-surface detection unit 143 that is capable of detecting contact of an operating tool on the back surface and by inputting such information from the back surface side of the terminal. Also, since the operation on the back surface may be input separately from the normal operation on the front surface, various operations may be realized by combining the detection results of the back-surface detection unit 143 and the front-surface detection unit 141. Furthermore, by making the operation input for the back-surface detection unit 143 simple, the operability can be prevented from being reduced even if the user is not able to see the operation input.

### <2. Second Embodiment>

### [2-1. Functional Overview of Information Processing Terminal]

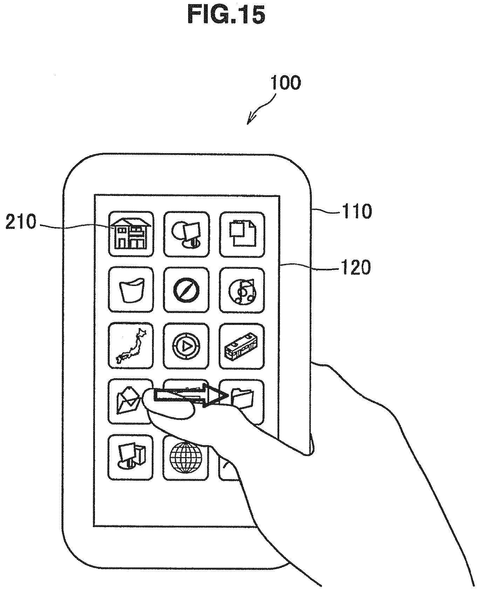

Next, functions of an information processing terminal 100 according to a second embodiment of the present disclosure will be described based on FIGS. 15 to 22. The information processing terminal 100 according to the present embodiment can be configured in the same way as the information processing terminal 100 according to the first embodiment, and its appearance is as shown in FIGS. 1 and 2. The information processing terminal 100 according to the present embodiment also has a touch sensor on the front surface and the back surface.

As described above, an operation input from the front surface may be performed intuitively, but there is an issue that an operating tool performing an operation input overlaps the display area and the visibility of the information displayed in the display area is reduced. Also, if an operation input is allowed only from the front surface as in related arts, it is difficult to realize various operations such as decision, drag, scroll, zoom, rotation or the like of an object without a conflict.

On the other hand, regarding an operation from the back surface, there is a high risk that an erroneous operation occurs by contact on the back surface not intended by the user. For example, an unintended function may be executed by fingers holding the terminal 100 touching the back surface. Also, since the user is not allowed to look at the input operation on the back surface, it is difficult to perform a complicated operation, and executable functions are limited. For example, when trying to perform an operation input from the back surface and select one object from a plurality of objects arranged on the screen, it is difficult to make the finger contact the desired object.

Thus, with the information processing terminal 100 according to the present embodiment, a desired operation is realized by combining both of the detection results of the front-surface detection unit 141 and the back-surface detection unit 143.

Particularly, a predetermined function is executed only when contact of a finger is detected by both the front-surface detection unit 141 and the back-surface detection unit 143. In the following, an operation input process by the information processing terminal 100 according to the present embodiment will be described. Additionally, the function configuration of the information processing terminal 100 according to the present embodiment is the same as the functional configuration of the information processing terminal 100 according to the first embodiment shown in FIG. 3. Therefore, explanation on the functional configuration of the information processing terminal 100 will be omitted in the present embodiment.

### [2-2. Operation Input Process by Combination of Detection Results from Front-Surface Detection Unit and Back-Surface Detection Unit]

### (2-2-1. Function Execution by Simultaneous Detection)

### (1) Explanation of Process for Executing Predetermined Function at the Time of Simultaneous Detection

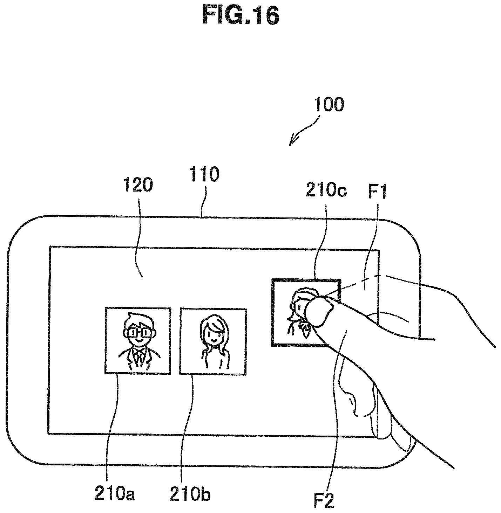

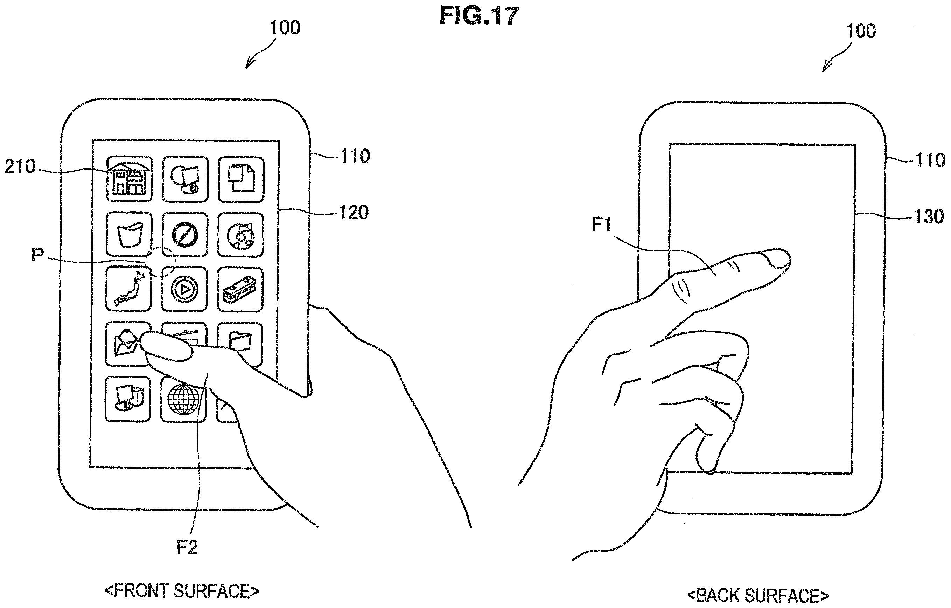

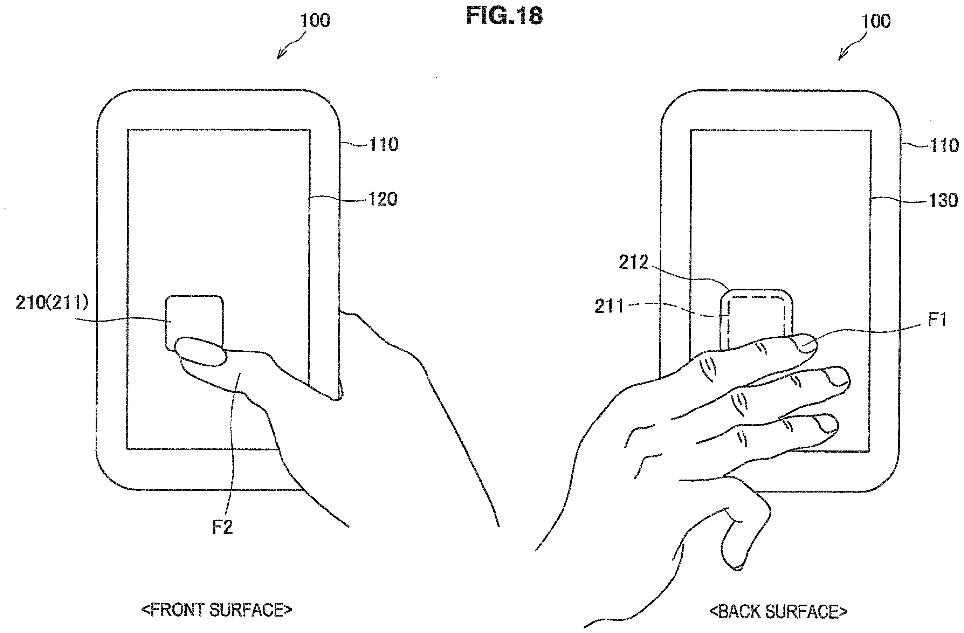

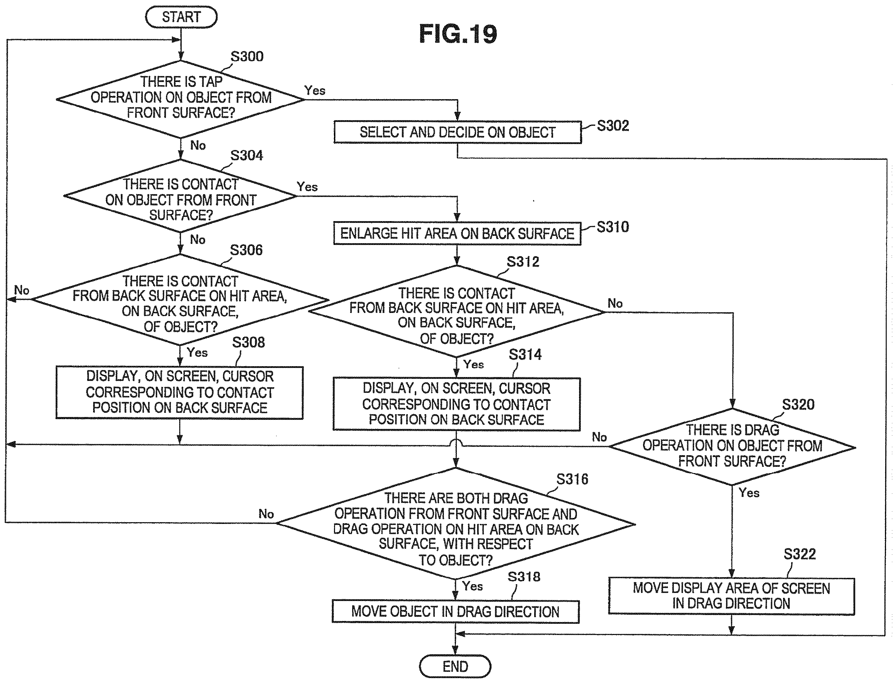

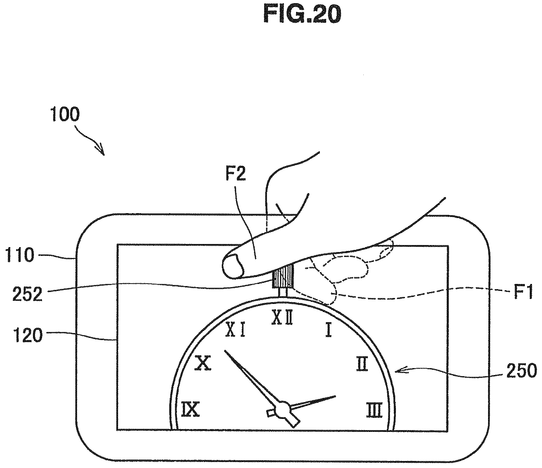

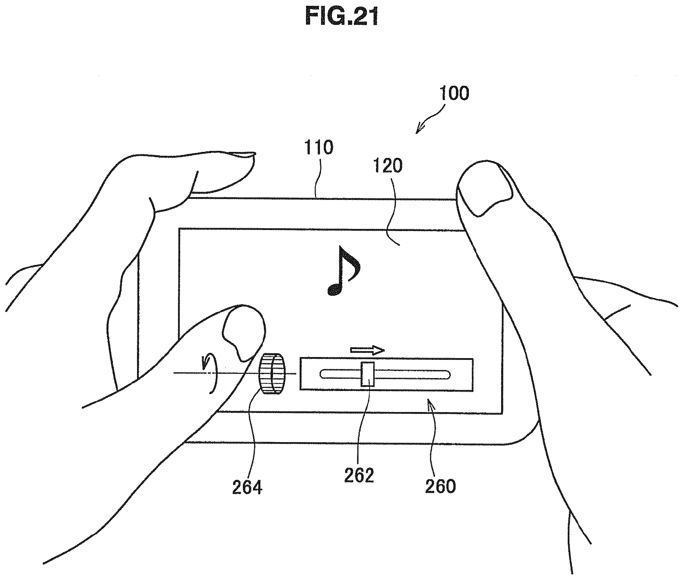

First, an operation input process by the information processing terminal 100 according to the present embodiment will be described based on FIGS. 15 to 21. FIG. 15 is an explanatory diagram showing a state where a plurality of objects 210 are arranged on the display unit 142 of the information processing terminal 100 according to the present embodiment. FIG. 16 is an explanatory diagram describing an operation input for moving an object 210 displayed on the display unit 142. FIG. 17 is an explanatory diagram describing an example of touch operations on the same object 210. FIG. 18 is an explanatory diagram describing an example of determination of touch operations on the same object. FIG. 19 is a flow chart showing an example of the operation input process for an object based on FIGS. 15 to 18. FIG. 20 is an explanatory diagram describing an operation input for moving the fingers operating an object in an opposite direction. FIG. 21 is an explanatory diagram describing an operation input process of decreasing or increasing, relative to the amount of movement of a target of operation, the amount of movement of an object that is to be moved according to the operation on the target of operation.

In the present example, an operation input process that enables execution of a predetermined function is performed in the case input detection is performed simultaneously by the front-surface detection unit 141 and the back-surface detection unit 143. For example, as shown in FIG. 15, in the case a plurality of objects 210 are arranged and displayed, it is assumed that a tap operation on the front surface enables to decide on the tapped object 210. It is also assumed that these objects 210 are arranged over a plurality of pages that are horizontally aligned, for example, and the pages can be moved by a horizontal drag operation. Here, in the case the position of a specific object 210 is desired to be changed, since the drag operation is associated with the function of moving the page itself, a conflict occurs, and simply performing the drag operation does not allow to change the position of the specific object 210.

In such a situation, it is conceivable to apply an operation input of long-pressing an object 210 whose position is to be changed and enabling movement of the object 210, and then moving the object 210 by a drag operation, for example. However, according to this operation input, there is an issue that time for determination of a long press has to pass to place the object 210 in a movable state. Thus, the information processing terminal 100 according to the present embodiment uses a configuration which includes a touch sensor on the front surface and the back surface, and, when the front-surface detection unit 141 and the back-surface detection unit 143 simultaneously detect contact of fingers on areas corresponding to the same object 210, allows movement of the object 210.

For example, as shown in FIG. 16, three objects 210a to 210c are assumed to be displayed on the display unit 142. At this time, upon determining from the detection results of the back-surface detection unit 143 and the front-surface detection unit 141 that an area corresponding to the object 210c is simultaneously contacted by a finger F1 from the back surface and a finger F2 from the front surface, the operation input information determination unit 145 enables movement of the object 210c within the display area. This allows the user to operate the object 210c which is contacted by the fingers from the front surface and the back surface in a manner as if the object 210c is pinched and moved, and an intuitive operation can be realized.

Additionally, movement of an object 210 is enabled when contact on the areas corresponding to the same object 210 is simultaneously detected by the back-surface detection unit 143 and the front-surface detection unit 141, but "simultaneously" does not have to be strictly at the same time point. When the time difference between the time point the contact is detected by the front-surface detection unit 141 and the time point the contact is detected by the back-surface detection unit 143 is a predetermined time difference that allows recognition of simultaneity, the simultaneity may be assumed.

Although a touch operation on the object 210 from the back surface is difficult when trying to perform the operation only from the back surface, the user is enabled to select an appropriate position on the back surface based on the somatic sense of a finger which allows the finger to contact a position near the finger on the front surface. For example, an operating system which moves the object 210 by a simple drag operation on the back surface only may be realized, but in this case, it is difficult to make the finger contact a desired object 210 by an operation on the back surface which is not being looked at by the user.

In contrast, the ease of selection of an object 210 from the back surface may be provided by the operation input process of the present example. With respect to the touch operation inputs from the front surface and the back surface, first, there is the method, as described above, of causing the fingers to contact an object 210 from both surfaces at approximately the same time by using the somatic sense.

Furthermore, as shown in FIG. 17, as another example of touch operation inputs from the front surface and the back surface, first, a finger F1 is made to contact the back surface. At this time, when the finger F1 contacts the back surface, the operation input information determination unit 145 causes the display unit 142 to display a cursor P that is associated with the contact position of the finger F1. Then, the user selects an object 210 from the front surface based on the cursor P displayed on the display unit 142. An operation of sandwiching the same object 210 from both the front surface and the back surface may be thereby realized.

Furthermore, with regard to the determination method of the touch operation inputs from the front surface and the back surface, a touch determination area 212 on the back surface may be set to be larger than a touch determination area 211 on the front surface, as shown in FIG. 18. This facilitates, when the finger F2 contacts a desired object 210 from the front surface, selection of the same object 210 from the back surface as from the front surface. For example, when the touch determination area 211 on the front surface is set to the same size as the object 210, the touch determination area 212 on the back surface is set to be slightly larger than the touch determination area 211 on the front surface. This may alleviate the issue of erroneous operations from the back surface where the user is not able to view the contact position of the finger F1.

Additionally, it is also possible to enable movement of an object 210 by a drag only when touch operations are performed on the same object 210 from the front surface and the back surface with a predetermined time interval or less. This may reduce unintended object operations (that is, erroneous operations).

### (2) Process Flow

An example of a process based on the processes described with reference to FIGS. 15 to 18 is shown in FIG. 19. FIG. 19 shows a process of an operating system according to which movement of the entire screen by a normal drag operation from the front surface, and selection of an object 210 by a tap operation from the front surface are realized on a screen as shown in FIG. 15 on which a plurality of objects 210 are arranged, and according to which movement of a single object is realized by a drag operation from both surfaces.

As shown in FIG. 19, first, the operation input information determination unit 145 determines whether or not there is a tap operation from the front surface on an object 210 displayed on the display unit 142 (S300). In the case of determining in step S300 that there is a tap operation from the front surface, the operation input information determination unit 145 selects and decides on the tapped object 210 (S302). On the other hand, in the case of determining in step S300 that there is no tap operation from the front surface, the operation input information determination unit 145 determines whether or not there is contact of a finger on the object 210 from the front surface (S304). In the case there is no contact of a finger on the object 210 from the front surface, the operation input information determination unit 145 further determines whether or not there is contact of a finger from the back surface on the touch determination area 212 on the back surface for the object 210 (S306).

In the case of determining in step S306 that there is no contact of a finger from the back surface on the touch determination area 212 on the back surface for the object 210, the operation input information determination unit 145 returns to step S300 and repeats the process. On the other hand, in the case of determining in step S306 that there is contact of a finger from the back surface on the touch determination area 212 on the back surface for the object 210, the operation input information determination unit 145 displays, on the display unit 142, a cursor P that is associated with the contact position of the finger on the back surface (S308). Then, it returns to step S300 and repeats the process.

Returning to the process of step S304, in the case there is contact of a finger from the front surface on the object 210, the operation input information determination unit 145 enlarges the touch determination area 212 on the back surface (S310). Then, the operation input information determination unit 145 determines whether or not there is contact of a finger from the back surface on the touch determination area 212 on the back surface for the object 210 (S312). In the case of determining in step S312 that there is contact of a finger from the back surface, the operation input information determination unit 145 displays, on the display unit 142, a cursor P that is associated with the contact position of the finger on the back surface, as in step S308 (S314). Then, the operation input information determination unit 145 determines whether or not a drag operation is performed on the object 210 from both the front surface and the back surface (S316), and in the case such a drag operation is not performed, returns to the process of step S300 and repeats the process.

On the other hand, in the case of determining in step S316 that a drag operation is performed on the object 210 from both the front surface and the back surface, the operation input information determination unit 145 moves the object 210 in the drag direction (S318).

Returning to the process of step S312, if it is determined that there is no contact of a finger from the back surface, the operation input information determination unit 145 determines whether or not there is a drag operation from the front surface for the object 210 (S320). If it is determined that there is no drag operation from the front surface for the object 210, the operation input information determination unit 145 returns to step S300 and repeats the process. On the other hand, if it is determined in step S320 that there is a drag operation from the front surface for the object 210, the operation input information determination unit 145 moves the display area of the screen in the drag direction (S322).

As described, the information processing terminal 100 according to the present embodiment is capable of realizing movement of a single object and movement of the entire display area, based on the detection results of the back-surface detection unit 143 and the front-surface detection unit 141.

### (3) Modified Example

Furthermore, according to the operation input process of the present example, movement of an object 210 is enabled when contact on areas corresponding to the same object 210 is simultaneously detected by the back-surface detection unit 143 and the front-surface detection unit 141. In the examples shown in FIGS. 15 to 18, an intuitive operation of pinching and moving an object 210 which is the target of movement is realized by moving the fingers F1 and F2 that are in contact with the object 210 in the same direction. On the other hand, it is also conceivable to operate an object 210 which is the target of operation by moving the fingers F1 and F2 that are in contact with the object 210 in the opposite directions.

For example, it is assumed as shown in FIG. 20 that a clock object 250 is displayed. The hands of the clock object 250 may be rotated by operating a screw portion 252 of the clock object 250. This operation of the screw portion 252 is performed by making the fingers F1 and F2 simultaneously contact, from the back surface and the front surface, the screw portion 252 of the object 250 displayed on the display unit 142 and then moving the fingers F1 and F2 in the opposite directions.

This can reduce the occurrence of erroneous operations as with the above-described examples, and also, a normal drag operation of, for example, moving the clock object 250 by a drag operation in the case the drag operation is input only from the front surface may be assigned. Furthermore, an intuitive operation of pinching the screw portion 252 which is the target of operation by making the fingers F1 and F2 simultaneously contact the screw portion 252 from the back surface and the front surface and then moving the fingers F1 and F2 in the opposite directions to thereby rotate the screw portion 252 may also be realized.

Additionally, in FIG. 20, the amount of operation on the hands of the clock object 250 with respect to the rotation of the screw portion 252 which is the target of operation is decided with the rotation direction of the screw portion 252 being transformed by the physics metaphor of a gear (not shown), for example. In this manner, according to the information processing terminal 100 of the present embodiment, with the rotation of the target of operation based on simultaneous operations from the front surface and the back surface, the rotation of the target of operation can realize movement of another object by the mechanism of transformation of an operation axis based on the metaphor of the screw, the gear, or the like. This allows the amount of movement of the object that is moved according to the operation on the target of operation to be reduced or increased relative to the amount of movement of the target of operation.

For example, as shown in FIG. 21, a situation will be described where the volume of content being played back by the information processing terminal 100 is being operated by a volume adjustment unit 260 displayed on the display unit 142. The volume of the content can be changed by moving a slider 262 of the volume adjustment unit 260 left or right. At this time, the slider 262 can also be moved by an adjustment roller 264. The slider 262 is moved by rotating the adjustment roller 264 based on the physics metaphor that the rotating movement of the adjustment roller 264 is transformed into the linear movement of the slider 262. Here, the position of the slider 262 can be adjusted with high accuracy by making the amount of linear movement of the slider 262 small relative to the amount of rotating movement of the adjustment roller 264, and thereby the volume of content may be finely adjusted.

As described, as well as realizing an intuitive operation, the amount of operation can also be intuitively grasped. Such an operation input process may be applied to an object used for zooming or focus adjustment of a camera, for example. Also, operation is facilitated, for example, in the case the display size of an object which is the target of operation is small and the object is hidden by a finger when actually operating the object with the finger, by indirectly operating the object which is the target of operation by operating an object that is associated with the object which is the target of operation.

### (2-2-2. Zoom-In/Zoom-Out Function Based on Operation Inputs for Displayed Content from Front Surface and Back Surface)

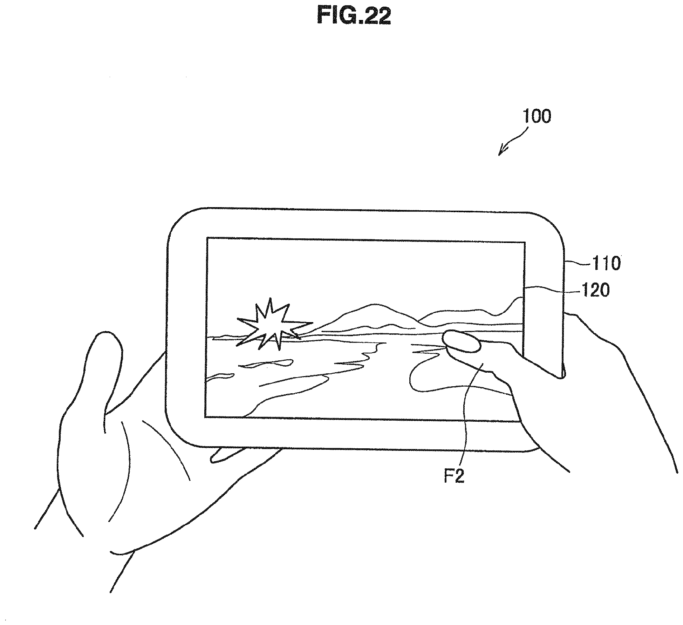

For example, as shown in FIG. 22, the information processing terminal 100 according to the present embodiment is also capable of providing, in an application for viewing photographs, an operating system that realizes a zoom-in/zoom-out function by an operation input on displayed content from the front surface and the back surface. FIG. 22 is an explanatory diagram for describing a zoom-in/zoom-out function based on an operation input on displayed content from the front surface and the back surface.

A state is considered where content is displayed on the display unit 142 of the information processing terminal 100. When recognizing from the detection result of the back-surface detection unit 143 that a tap operation is performed in a state a finger is not in contact with the front surface of the information processing terminal 100, the operation input information determination unit 145 of the information processing terminal 100 does not execute the function corresponding to the tap operation on the back surface. This is to prevent or at least impede execution of a function corresponding to the operation in a case the user unintentionally contacts the back surface.

On the other hand, only in the case there is an operation input for content displayed on the display unit 142 from both the front surface and the back surface does the operation input information determination unit 145 cause a function of achieving symmetric effects (in this case, a zoom-in/zoom-out function) to be executed based on the detection result of the front-surface detection unit 141 or the detection result of the back-surface detection unit 143. This enables the user to intuitively grasp, in association with the physics metaphor, the meaning of an operation that is realized.

For example, in the case a tap operation from the front surface is recognized from the detection result of the front-surface detection unit 141 in a state a finger is in contact with the back surface of the information processing terminal 100, the operation input information determination unit 145 causes content displayed on the display unit 142 to be zoomed in. With a tap operation from the front surface, zoom-in centring on the position of the tap operation is performed (for example, the zoom rate is changed from 1 to 1.2).

In contrast, in the case a tap operation from the back surface is recognized in a state a finger is in contact with the front surface of the information processing terminal 100, the operation input information determination unit 145 causes content displayed on the display unit 142 to be zoomed out. For example, with a tap from the back surface, a zoom-out operation of changing the zoom rate from 1.2 to 1 is performed. An area displayed at the time of zoom out is the area that was originally displayed before zoom-in by a tap operation on the front surface. That is, unlike the operation from the front surface, the position of the zoom operation is not specified for the tap operation from the back surface. This is due to the property that the finger performing an operation input from the back surface is not seen by the user and it is thus difficult to specify the position.

Additionally, as with the present example, an operation is also conceivable of causing zoom-in centring on a specific position to function by a long-press operation from the front surface on the position, and of causing zoom-out to the original display area by a long-press operation from the back surface.

In the foregoing, the operation input process by the information processing terminal 100 according to the second embodiment of the present disclosure has been described. According to the present embodiment, a desired operation is intuitively and efficiently realized by a complex operation on an object displayed on the display unit from both the front surface and the back surface.

Specifically, the operating system which enables a drag operation on an object by an operation of pinching the object from the front surface and the back surface is capable of avoiding conflict with another operation, such as dragging of pages, and of realizing an intuitive object operation. Likewise, the operating system which realizes a rotation operation by adding opposite drag operations from the front surface and the back surface of an object or the operating system which realizes zoom-in/zoom-out by execution of a tap operation on one surface in a state the other surface is being contacted is also capable of avoiding conflict with another operation and realizing an intuitive object operation. Also, an issue that it is difficult to select an object from the back surface with high accuracy can be resolved by selecting the object by operations from both surfaces.

These operations are of operating systems based on physics metaphors, such as pinching or rotating of an object, moving of the object in a tapped direction, and the like, and thus intuitive grasp by the user is enabled. Also, by realizing, in all these operating systems, an operating system in which a command is executed by a complex operation from the front surface and the back surface, an issue of an erroneous operation by unintentional contact of the user on the back surface, for example, may be avoided, and the user is enabled to efficiently realize an operation.

### <3. Example Hardware Configuration>

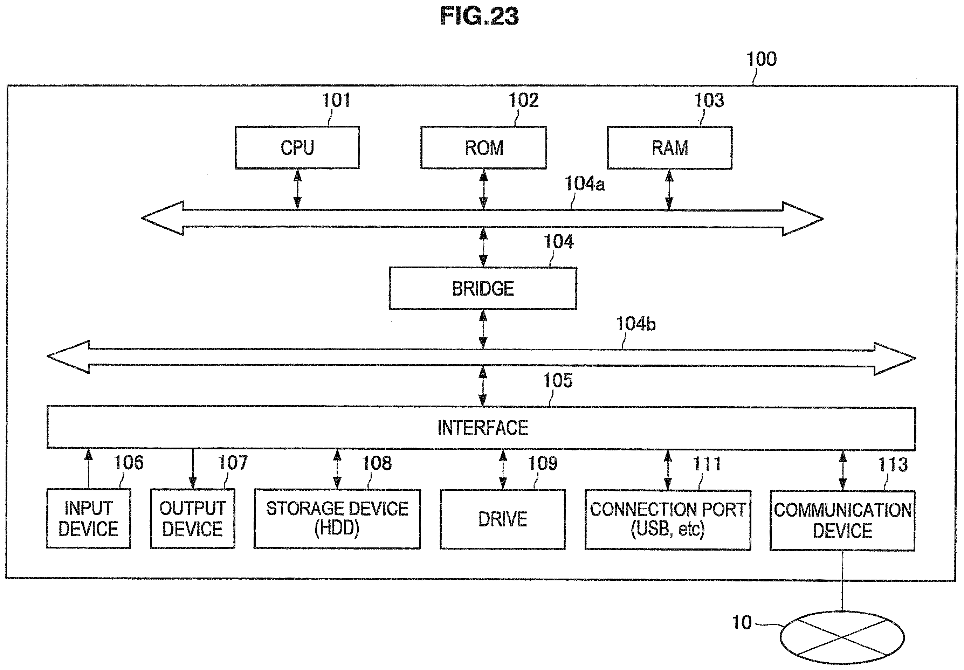

The process of the information processing terminal 100 according to the present embodiment may be performed by hardware or may be performed by software. In this case, the information processing terminal 100 may be configured as shown in FIG. 23. In the following, an example of the hardware configuration of the information processing terminal 100 according to the present embodiment will be described based on FIG. 23.

The information processing terminal 100 according to the present embodiment may be realized by a processing apparatus such as a computer, as described above. As shown in FIG. 23, the information processing terminal 100 includes a CPU (Central Processing Unit) 101, a ROM (Read Only Memory) 102, a RAM (Random Access Memory) 103, and a host bus 104a. The information processing terminal 100 also includes a bridge 104, an external bus 104b, an interface 105, an input device 106, an output device 107, a storage device (HDD) 108, a drive 109, a connection port 111, and a communication device 113.

The CPU 101 functions as an arithmetic processing unit and a control unit, and controls entire operation within the information processing terminal 100 according to various programs. Also, the CPU 101 may be a microprocessor. The ROM 102 stores a program to be loaded on the CPU 101, operation parameters, and the like. The RAM 103 temporarily stores a program used in the execution of the CPU 101, parameters arbitrarily changed in the execution, or the like. These are connected to each other by the host bus 104a configured from a CPU bus or the like.

The host bus 104a is connected to the external bus 104b such as a PCI (Peripheral Component Interconnect/Interface) bus via the bridge 104. Additionally, the host bus 104a, the bridge 104, and the external bus 104b do not necessarily have to be separately configured, and these functions may be implemented in a single bus.

The input device 106 is configured from input means for a user to input information, such as a mouse, a keyboard, a touch panel, a button, a microphone, a switch, and a lever, an input control circuit for generating an input signal based on input from the user and outputting the same to the CPU 101, and the like. The output device 107 includes a display device such as a liquid crystal display (LCD) device, an OLED (Organic Light Emitting Diode) device or a lamp, and an audio output device such as speakers.

The storage device 108 is an example of the storage unit of the information processing terminal 100, and is a device for storing data. The storage device 108 may include a storage medium, a recording device that records data in the storage medium, a read-out device that reads data from the storage medium, a deleting device that deletes data recorded in the storage medium, or the like. The storage device 108 is configured from an HDD (Hard Disk Drive), for example. This storage device 108 drives a hard disk, and stores a program to be executed by the CPU 101 and various data.

The drive 109 is a reader/writer for a storage medium, and is built in or externally attached to the information processing terminal 100. The drive 109 reads information recorded on a removable recording medium attached thereto, such as a magnetic disk, an optical disk, a magneto-optical disk, or a semiconductor memory, and outputs the same to the RAM 103.

The connection port 111 is an interface to be connected to an external appliance, and is a connection to an external appliance that is capable of data transmission via a USB (Universal Serial Bus) or the like, for example. Also, the communication device 113 is a communication interface configured from a communication device or the like for connecting to a communication network 10, for example. Furthermore, the communication device 113 may be a wireless LAN (Local Area Network)-compatible communication device, a wireless USB-compatible communication device, or a wired communication device that performs communication by wire.

## Claims

1. An information processing apparatus (100) comprising:
a first detection unit (143), provided on a back surface of the information processing apparatus (100), configured to detect an operation input to the back surface of the information processing apparatus (100);
a second detection unit (141), provided on a front surface of the information processing apparatus (100), configured to detect an operation input to a display unit (142) provided on the front surface of the information processing apparatus (100);
a function execution unit (146); and
an operation input information determination unit (145) configured to:
determine, based on the detection result of the first detection unit (143), whether or not a finger (F1) is in contact with a specific area on the back surface when the information processing apparatus (100) is in an enabled state in which a password lock is released;
perform control, by instructing the function execution unit (146), to display a menu (230) on the display unit (142) while the finger (F1) is determined to be in contact with the specific area on the back surface; and
if an operation input to the menu (230) is detected based on the detection result of the second detection unit (141) while the menu (230) is displayed on the display unit (142), select a menu item of the menu (230) based on the operation input to the menu (230);
wherein the function execution unit (146) is configured to execute a function corresponding to the selected menu item, and
wherein the information processing apparatus (100) further comprises:
an authentication information storage unit (148) configured to store authentication information that is based on a movement of an operating tool detected by the first detection unit, and
an authentication processing unit (144) configured to perform an authentication process based on an operation input to the back surface detected by the first detection unit (143) in a disabled state of the information processing apparatus (100) in which the password lock is active, wherein the authentication processing unit (144) performs the authentication process by identifying input information input from the back surface based on the operation input to the back surface detected by the first detection unit (143) in the disabled state of the information processing apparatus (100), comparing the input information with the authentication information, and setting the information processing apparatus (100) to the enabled state in which the password lock is released if it is determined that the input information and the authentication information match.

2. The information processing apparatus (100) according to claim 1,
wherein the operation input to the back surface detected by the first detection unit (143) is not displayed on the display unit (142).

3. The information processing apparatus (100) according to any one of claims 1 to 2,
wherein the input information input from the back surface is identified based on a direction of a movement of the operating tool from a starting point, where the starting point is a first position detected by the first detection unit (143).

4. The information processing apparatus (100) according to any one of claims 1 to 2,
wherein the input information input from the back surface is identified based on a shape of a track of a movement of the operating tool from a starting point, where the starting point is a first position detected by the first detection unit (143).

5. The information processing apparatus (100) according to any one of claims 1 to 2,
wherein the input information input from the back surface is identified based on a relative direction and a relative distance of a movement of the operating tool from a starting point, where the starting point is a first position detected by the first detection unit (143).

6. An information processing method for an information processing apparatus (100) comprising:
detecting, by a first detection unit (143) provided on a back surface of the information processing apparatus (100), an operation input to the back surface of the information processing apparatus (100);
detecting, by a second detection unit (141), provided on a front surface of the information processing apparatus (100), an operation input to a display unit (142) provided on the front surface of the information processing apparatus (100);
determining, based on the detection result of the first detection unit (143), whether or not a finger (F1) is in contact with a specific area on the back surface when the information processing apparatus (100) is in an enabled state in which a password lock is released;
performing control to display a menu (230) on the display unit (142) while the finger (F1) is determined to be in contact with the specific area on the back surface;
if an operation input to the menu (230) is detected based on the detection result of the second detection unit (141) while the menu (230) is displayed on the display unit (142), selecting a menu item of the menu (230) based on the operation input to the menu (230); and
executing a function corresponding to the selected menu item, and further comprising:
storing authentication information that is based on a movement of an operating tool detected by the first detection unit, and
performing an authentication process based on an operation input to the back surface detected by the first detection unit (143) in a disabled state of the information processing apparatus (100) in which the password lock is active, wherein the authentication process is performed by identifying input information input from the back surface based on the operation input to the back surface detected by the first detection unit (143) in the disabled state of the information processing apparatus (100), comparing the input information with the authentication information, and setting the information processing apparatus (100) to the enabled state in which the password lock is released if it is determined that the input information and the authentication information match.

7. A computer program comprising instructions to cause the information processing apparatus (100) of claim 1 to perform the method of claim 6.

## Patentansprüche

1. Informationsverarbeitungsvorrichtung (100), die Folgendes umfasst:
eine erste Detektionseinheit (143), die auf einer rückseitigen Fläche der Informationsverarbeitungsvorrichtung (100) bereitgestellt und konfiguriert ist, um eine Bedienungseingabe in die rückseitige Fläche der Informationsverarbeitungsvorrichtung (100) zu detektieren;
eine zweite Detektionseinheit (141), die auf einer vorderseitigen Fläche der Informationsverarbeitungsvorrichtung (100) bereitgestellt und konfiguriert ist, um eine Bedienungseingabe in eine Anzeigeeinheit (142), die auf der vorderseitigen Fläche der Informationsverarbeitungsvorrichtung (100) bereitgestellt ist, zu detektieren;
eine Funktionsausführungseinheit (146); und
eine Bedienungseingabe-Informationsbestimmungseinheit (145), die für Folgendes konfiguriert ist:
Bestimmen basierend auf dem Detektionsergebnis der ersten Detektionseinheit (143), ob ein Finger (F1) einen speziellen Bereich auf der rückseitigen Fläche berührt oder nicht, wenn die Informationsverarbeitungsvorrichtung (100) in einem freigeschalteten Zustand ist, in dem eine Kennwortsperre aufgehoben wird;
Durchführen einer Steuerung durch Anweisen der Funktionsausführungseinheit (146) zum Anzeigen eines Menüs (230) auf der Anzeigeeinheit (142), während der Finger (F1), wie bestimmt wird, den speziellen Bereich auf der rückseitigen Fläche berührt; und,
wenn eine Bedienungseingabe in das Menü (230) basierend auf dem Detektionsergebnis der zweiten Detektionseinheit (141) detektiert wird, während das Menü (230) auf der Anzeigeeinheit (142) angezeigt wird, Auswählen einer Menüoption des Menüs (230) basierend auf der Bedienungseingabe in das Menü (230);
wobei die Funktionsausführungseinheit (146) konfiguriert ist, um eine mit der ausgewählten Menüoption korrespondierende Funktion auszuführen, und
wobei die Informationsverarbeitungsvorrichtung (100) ferner Folgendes umfasst:
eine Authentifizierungsinformationsspeichereinheit (148), die konfiguriert ist, um Authentifizierungsinformationen, die auf einer durch die erste Detektionseinheit detektierten Bewegung eines Bedienungsmittels basieren, zu speichern, und
eine Authentifizierungsverarbeitungseinheit (144), die konfiguriert ist, um einen Authentifizierungsvorgang basierend auf einer Bedienungseingabe in die rückseitige Fläche, die durch die erste Detektionseinheit (143) detektiert wird, während die Informationsverarbeitungsvorrichtung (100) in einem ausgeschalteten Zustand ist, in dem die Kennwortsperre aktiv ist, durchzuführen, wobei die Authentifizierungsverarbeitungseinheit (144) den Authentifizierungsvorgang durchführt, indem sie auf der rückseitigen Fläche eingegebene Eingabe-Informationen basierend auf der Bedienungseingabe in die rückseitige Fläche, die durch die erste Detektionseinheit (143) detektiert wird, während die Informationsverarbeitungsvorrichtung (100) im ausgeschalteten Zustand ist, identifiziert, die Eingabe-Informationen mit den Authentifizierungsinformationen vergleicht und die Informationsverarbeitungsvorrichtung (100) in den eingeschalteten Zustand versetzt, in dem die Kennwortsperre aufgehoben wird, wenn bestimmt wird, dass die Eingabe-Informationen und die Authentifizierungsinformationen übereinstimmen.

2. Informationsverarbeitungsvorrichtung (100) nach Anspruch 1,
wobei die Bedienungseingabe in die rückseitige Fläche, die durch die erste Detektionseinheit (143) detektiert wird, nicht auf der Anzeigeeinheit (142) angezeigt wird.

3. Informationsverarbeitungsvorrichtung (100) nach einem der Ansprüche 1 bis 2,
wobei die auf der rückseitigen Fläche eingegebenen Eingabe-Informationen basierend auf einer Richtung einer Bewegung des Bedienungsmittels ab einem Ausgangspunkt identifiziert werden, wobei der Ausgangspunkt eine durch die erste Detektionseinheit (143) detektierte erste Stelle ist.

4. Informationsverarbeitungsvorrichtung (100) nach einem der Ansprüche 1 bis 2,
wobei die auf der rückseitigen Fläche eingegebenen Eingabe-Informationen basierend auf einem Verlauf einer Linie einer Bewegung des Bedienungsmittels ab einem Ausgangspunkt identifiziert werden, wobei der Ausgangspunkt eine durch die erste Detektionseinheit (143) detektierte erste Stelle ist.

5. Informationsverarbeitungsvorrichtung (100) nach einem der Ansprüche 1 bis 2,
wobei die auf der rückseitigen Fläche eingegebenen Eingabe-Informationen basierend auf einer relativen Richtung und einem relativen Abstand einer Bewegung des Bedienungsmittels ab einem Ausgangspunkt identifiziert werden, wobei der Ausgangspunkt eine durch die erste Detektionseinheit (143) detektierte erste Stelle ist.

6. Informationsverarbeitungsverfahren für eine Informationsverarbeitungsvorrichtung (100), umfassend:
Detektieren einer Bedienungseingabe in eine rückseitige Fläche der Informationsverarbeitungsvorrichtung (100) durch eine erste Detektionseinheit (143), die auf der rückseitigen Fläche der Informationsverarbeitungsvorrichtung (100) bereitgestellt ist;
Detektieren einer Bedienungseingabe in eine Anzeigeeinheit (142), die auf einer vorderseitigen Fläche der Informationsverarbeitungsvorrichtung (100) bereitgestellt ist, durch eine zweite Detektionseinheit (141), die auf der vorderseitigen Fläche der Informationsverarbeitungsvorrichtung (100) bereitgestellt ist;
Bestimmen basierend auf dem Detektionsergebnis der ersten Detektionseinheit (143), ob ein Finger (F1) einen speziellen Bereich auf der rückseitigen Fläche berührt oder nicht, wenn die Informationsverarbeitungsvorrichtung (100) in einem freigeschalteten Zustand ist, in dem eine Kennwortsperre aufgehoben wird;
Durchführen einer Steuerung zum Anzeigen eines Menüs (230) auf der Anzeigeeinheit (142), während der Finger (F1), wie bestimmt wird, den speziellen Bereich auf der rückseitigen Fläche berührt;
wenn eine Bedienungseingabe in das Menü (230) basierend auf dem Detektionsergebnis der zweiten Detektionseinheit (141) detektiert wird, während das Menü (230) auf der Anzeigeeinheit (142) angezeigt wird, Auswählen einer Menüoption des Menüs (230) basierend auf der Bedienungseingabe in das Menü (230); und
Ausführen einer mit der ausgewählten Menüoption korrespondierenden Funktion, und ferner umfassend:
Speichern von Authentifizierungsinformationen, die auf einer durch die erste Detektionseinheit detektierten Bewegung eines Bedienungsmittels basieren, und
Durchführen eines Authentifizierungsvorgangs basierend auf einer Bedienungseingabe in die rückseitige Fläche, die durch die erste Detektionseinheit (143) detektiert wird, während die Informationsverarbeitungsvorrichtung (100) in einem ausgeschalteten Zustand ist, in dem die Kennwortsperre aktiv ist, wobei der Authentifizierungsvorgang durch Folgendes durchgeführt wird: Identifizieren von auf der rückseitigen Fläche eingegebenen Eingabe-Informationen basierend auf der Bedienungseingabe in die rückseitige Fläche, die durch die erste Detektionseinheit (143) detektiert wird, während die Informationsverarbeitungsvorrichtung (100) im ausgeschalteten Zustand ist, Vergleichen der Eingabe-Informationen mit den Authentifizierungsinformationen und Versetzen der Informationsverarbeitungsvorrichtung (100) in den freigeschalteten Zustand, in dem die Kennwortsperre aufgehoben wird, wenn bestimmt wird, dass die Eingabe-Informationen und die Authentifizierungsinformationen übereinstimmen.

7. Computerprogramm, das Anweisungen umfasst, um zu bewirken, dass die Informationsverarbeitungsvorrichtung (100) nach Anspruch 1 das Verfahren nach Anspruch 6 durchführt.

## Revendications

1. Appareil de traitement d'informations (100) comprenant :
une première unité de détection (143), pourvue sur une surface arrière de l'appareil de traitement d'informations (100), configurée pour détecter une entrée d'opération sur la surface arrière de l'appareil de traitement d'informations (100) ;
une seconde unité de détection (141), pourvue sur une surface avant de l'appareil de traitement d'informations (100), configurée pour détecter une entrée d'opération sur une unité d'affichage (142) pourvue sur la surface avant de l'appareil de traitement d'informations (100) ;
une unité d'exécution de fonction (146) ; et
une unité de détermination d'informations d'entrée d'opération (145) configurée pour :
déterminer, sur la base du résultat de détection de la première unité de détection (143), si oui ou non un doigt (F1) est en contact avec une zone spécifique sur la surface arrière lorsque l'appareil de traitement d'informations (100) est dans un état activé dans lequel un verrouillage par mot de passe est libéré ;
effectuer une commande, en donnant pour instruction à l'unité d'exécution de fonction (146), d'afficher un menu (230) sur l'unité d'affichage (142) tandis que le doigt (F1) est déterminé comme étant en contact avec la zone spécifique sur la surface arrière ; et
si une entrée d'opération sur le menu (230) est détectée sur la base du résultat de détection de la seconde unité de détection (141) tandis que le menu (230) est affiché sur l'unité d'affichage (142), sélectionner un élément de menu du menu (230) sur la base de l'entrée d'opération sur le menu (230) ;
où l'unité d'exécution de fonction (146) est configurée pour exécuter une fonction correspondant à l'élément de menu sélectionné, et
où l'appareil de traitement d'informations (100) comprend en outre :
une unité de stockage d'informations d'authentification (148) configurée pour stocker des informations d'authentification qui sont basées sur un mouvement d'un outil d'opération détecté par la première unité de détection, et
une unité de traitement d'authentification (144) configurée pour exécuter un processus d'authentification basé sur une entrée d'opération sur la surface arrière détectée par la première unité de détection (143) dans un état désactivé de l'appareil de traitement d'informations (100), où le verrouillage par mot de passe est actif, où l'unité de traitement d'authentification (144) exécute le processus d'authentification en identifiant des informations d'entrée depuis la surface arrière sur la base de l'entrée d'opération sur la surface arrière détectée par la première unité de détection (143) dans l'état désactivé de l'appareil de traitement d'informations (100),
comparer les informations d'entrée aux informations d'authentification, et
régler l'appareil de traitement d'informations (100) sur l'état activé dans lequel le verrouillage par mot de passe est libéré s'il est déterminé que les informations d'entrée et les informations d'authentification correspondent.

2. Appareil de traitement d'informations (100) selon la revendication 1,
dans lequel l'entrée d'opération sur la surface arrière détectée par la première unité de détection (143) n'est pas affichée sur l'unité d'affichage (142).

3. Appareil de traitement d'informations (100) selon l'une quelconque des revendications 1 à 2,
dans lequel les informations d'entrée entrées depuis la surface arrière sont identifiées sur la base d'une direction de mouvement de l'outil d'opération depuis un point de départ, où le point de départ est une première position détectée par la première unité de détection (143) .

4. Appareil de traitement d'informations (100) selon l'une quelconque des revendications 1 à 2,
dans lequel les informations d'entrée entrées depuis la surface arrière sont identifiées sur la base d'une forme d'une piste d'un mouvement de l'outil d'opération à depuis un point de départ, où le point de départ est une première position détectée par la première unité de détection (143).

5. Appareil de traitement d'informations (100) selon l'une quelconque des revendications 1 à 2,
dans lequel les informations d'entrée entrées depuis la surface arrière sont identifiées sur la base d'une direction relative et d'une distance relative d'un mouvement de l'outil d'opération depuis un point de départ, où le point de départ est une première position détectée par la première unité de détection (143).

6. Procédé de traitement d'informations pour un appareil de traitement d'informations (100), comprenant les étapes suivantes :
détecter, par une première unité de détection (143) pourvue sur une surface arrière de l'appareil de traitement d'informations (100), une entrée d'opération sur la surface arrière de l'appareil de traitement d'informations (100) ;
détecter, par une seconde unité de détection (141) pourvue sur une surface avant de l'appareil de traitement d'informations (100), une entrée d'opération sur une unité d'affichage (142) pourvue sur la surface avant de l'appareil de traitement d'informations (100) ;
déterminer, sur la base du résultat de détection de la première unité de détection (143), si un doigt (F1) est en contact ou non avec une zone spécifique sur la surface arrière lorsque l'appareil de traitement d'informations (100) est dans un état activé dans lequel un verrouillage par mot de passe est libéré ;
effectuer une commande pour afficher un menu (230) sur l'unité d'affichage (142) tandis que le doigt (F1) est déterminé comme étant en contact avec la zone spécifique sur la surface arrière ;
si une entrée d'opération sur le menu (230) est détectée sur la base du résultat de détection de la seconde unité de détection (141) tandis que le menu (230) est affiché sur l'unité d'affichage (142), sélectionner un élément de menu du menu (230) sur la base de l'entrée d'opération sur le menu (230) ; et
exécuter une fonction correspondant à l'élément de menu sélectionné, et
le procédé comprenant en outre les étapes suivantes :
stocker des informations d'authentification qui sont basées sur un mouvement d'un outil d'opération détecté par la première unité de détection, et
exécuter un processus d'authentification sur la base d'une entrée d'opération sur la surface arrière détectée par la première unité de détection (143) dans un état désactivé de l'appareil de traitement d'informations (100) dans lequel le verrouillage par mot de passe est actif, où le processus d'authentification est exécuté en identifiant des informations d'entrée entrées depuis la surface arrière sur la base de l'entrée d'opération sur la surface arrière détectée par la première unité de détection (143) dans l'état désactivé de l'appareil de traitement d'informations (100),
comparer les informations d'entrée aux informations d'authentification, et placer l'appareil de traitement d'informations (100) dans l'état activé, dans lequel le verrouillage par mot de passe est libéré, s'il est déterminé que les informations d'entrée et les informations d'authentification correspondent.

7. Programme informatique comprenant des instructions pour amener l'appareil de traitement d'informations (100) de la revendication 1 à exécuter le procédé de la revendication 6.
